# EUROPEAN PATENT APPLICATION

(11) **EP 4 446 392 A1**
(43) Date of publication of application: **16.10.2024**
(21) Application number: 22904122.3
(22) Date of filing: 01.12.2022
(51) Int. Cl.: C09J 175/04, C08G 18/09, C08G 18/10, C08G 18/79, C09J 175/00

(54) **ADHESIVE AGENT, LAMINATE, LAMINATE MANUFACTURING METHOD, AND PACKAGING MATERIAL**

(30) Priority: 09.12.2021 JP 2021199941
(71) Applicant: DIC Corporation, Tokyo 174-8520 (JP)
(72) Inventor: TOMITA Daiki, Tokyo 174-8520 (JP); HIROTA Yasunobu, Tokyo 174-8520 (JP); HOSONO Tsukiko, Tokyo 174-8520 (JP); AKITA Kouji, Tokyo 174-8520 (JP); WATANABE Toshio, Tokyo 174-8520 (JP); TAKAHASHI Shigekazu, Tokyo 103-8233 (JP)
(74) Representative: Kraus & Lederer PartGmbB
(86) International application number: PCT/JP2022/044344
(87) International publication number: WO 2023/106191

(57) **Abstract**

The present invention provides a two-liquid curable adhesive in which a curing speed is favorable even in a case where an isocyanate monomer is reduced to a level at which it is determined that there is no influence on the human body or the environment.

The present invention provides a two-liquid curable adhesive containing a polyisocyanate composition (X) and a polyol composition (Y), in which the polyisocyanate composition (X) contains a compound (A1) having one or more isocyanate groups with a number-average molecular weight of more than 280 and an isocyanate monomer (A2) having a number-average molecular weight of 140 to 280, a blending amount of the isocyanate monomer (A2) is 0.001% by mass or more and 0.1% by mass or less with respect to a solid content of the polyisocyanate composition (X), and the polyol composition (Y) contains a polyol compound (B) and an amine compound (C) having an NH₂ group or an NHR group; a laminate using the adhesive; a method for producing a laminate; and a packaging material.

## Description

### TECHNICAL FIELD

The present invention relates to a two-liquid curable adhesive, a laminate, a method for producing a laminate, and a packaging material.

### BACKGROUND ART

A laminate used for various packaging materials, labels, and the like is laminated with various base materials such as plastic films, metal foils, and paper, and thus designability, functionality, preservability, convenience, transportability, and the like are imparted. A packaging material obtained by molding the laminate into a bag shape has been used as a packaging material in various fields including food, pharmaceuticals, and detergents.

In the related art, as an adhesive used in a case of laminating the laminate used in such a packaging material, a urethane-reactive two-liquid-type adhesive (hereinafter, may be referred to as a two-liquid curable adhesive or a reactive adhesive) has been widely used. On the other hand, in the urethane-reactive two-liquid curable adhesive, since an isocyanate prepolymer is used as a curing component, an isocyanate monomer remaining in an adhesive layer causes a problem, and in particular, in recent years, in consideration of the influence on the human body and the environment, it has been decided that handling conditions are strengthened by the REACH regulation of the European Commission, regardless of the type of the isocyanate monomer, and it is required to reduce the isocyanate monomer remaining in the adhesive layer as much as possible.

A method for reducing the residual isocyanate monomer has been studied in the related art.

For example, PTL1 discloses a polyurethane adhesive containing 100 parts by weight of a urethane prepolymer and 10 to 40 parts by weight of a flowability imparting agent or a plasticizer, which consists of a low-molecular-weight polar polymer having no active hydrogen and having a number-average molecular weight of 300 to 10,000, in which an amount of an isocyanate monomer in the adhesive is 0.01% to 4% by weight (see PTL1).

In addition, for example, PTL2 discloses a method for forming an isocyanatefunctional prepolymer having a low isocyanate residue, the method including (a) reacting a polyol selected from the group consisting of polyether polyol, polyester polyol, polyester polyether polyol, acrylic polyol, glycol, and a mixture thereof with an isocyanate monomer to form a reaction mixture containing a prepolymer having an NCO content of 2.5% to 11.5% by weight and an average NCO functional group in a range of 2.0 to 3.0, and (b) allowing the reaction mixture containing the prepolymer and unreacted isocyanate to pass through a short path evaporator to remove the unreacted isocyanate to be an amount of less than 0.15% by weight (see PTL2).

### CITATION LIST

### PATENT LITERATURE

PTL 1: JP-A-2005-2286
PTL2: JP-A-2002-265552

### SUMMARY OF INVENTION

### TECHNICAL PROBLEM

As a result of studying an adhesive containing an isocyanate composition in which the content of such a residual isocyanate monomer is reduced, it has been found that a curing speed of the adhesive is slower than that of an adhesive containing an isocyanate composition containing a large amount of isocyanate monomer, and productivity of the laminate is deteriorated.

An object of the invention is to provide a two-liquid curable adhesive in which a curing speed is favorable even in a case where an isocyanate monomer is reduced to a level at which it is determined that there is no influence on the human body or the environment.

### SOLUTION TO PROBLEM

The present inventors have found that the objects can be achieved by using a polyisocyanate composition in which a specific low-molecular-weight isocyanate monomer is blended in a specific amount, and a two-liquid curable adhesive containing the same.

That is, the invention relates to a two-liquid curable adhesive containing a polyisocyanate composition (X) and a polyol composition (Y), in which the polyisocyanate composition (X) contains a compound (A1) having one or more isocyanate groups with a number-average molecular weight of more than 280 and an isocyanate monomer (A2) having a number-average molecular weight of 140 to 280, a blending amount of the isocyanate monomer (A2) is 0.001% by mass or more and 0.1% by mass or less with respect to a solid content of the polyisocyanate composition (X), and the polyol composition (Y) contains a polyol compound (B) and an amine compound (C) having an NH₂ group or an NHR group.

In addition, the invention provides a laminate including a first base material, a second base material, and an adhesive layer for bonding the first base material and the second base material to each other, in which the adhesive layer is a cured coating film of the two-liquid curable adhesive.

In addition, the invention provides a packaging material including the laminate.

### ADVANTAGEOUS EFFECTS OF INVENTION

According to the invention, it is possible to provide a two-liquid curable adhesive in which a curing speed is favorable even in a case where an isocyanate monomer is reduced to a level at which it is determined that there is no influence on the human body or the environment.

### DESCRIPTION OF EMBODIMENTS

### <Definition>

In the invention, a number-average molecular weight and a weight-average molecular weight are values measured by gel permeation chromatography (GPC) under the following conditions.

Measuring device: HLC-8320GPC manufactured by Tosoh Corporation
Column: TSKgel 4000HXL, TSKgel 3000HXL, TSKgel 2000HXL, and TSKgel 1000HXL manufactured by Tosoh Corporation
Detector: RI (differential refractometer)
Data processing: MULTI STATION GPC-8020 model II manufactured by Tosoh Corporation
Measurement conditions;
Column temperature: 40°C
Solvent: tetrahydrofuran
Flow rate: 0.35 ml/min
Standard: monodisperse polystyrene
Sample: 0.2% by mass in terms of resin solid content of a tetrahydrofuran solution filtered through a microfilter (100 µl)

### <Two-liquid curable adhesive>

The two-liquid curable adhesive according to the invention contains the polyisocyanate composition (X) and the polyol composition (Y).

The polyisocyanate composition (X) used in the adhesive according to the invention contains a compound (A1) having one or more isocyanate groups with a number-average molecular weight of more than 280 and an isocyanate monomer (A2) having a number-average molecular weight of 140 to 280, in which a blending amount of the isocyanate monomer (A2) is 0.001% by mass or more and 0.1% by mass or less with respect to the solid content of the polyisocyanate composition.

### (Compound (A1) having one or more isocyanate groups with number-average molecular weight of more than 280)

The compound (A1) having one or more isocyanate groups with a number-average molecular weight of more than 280 (hereinafter, may be referred to as an isocyanate compound (A1)) used in the invention is not particularly limited as long as it is a compound having one or more isocyanates with a number-average molecular weight of more than 280; and is preferably a urethane prepolymer (A1-1) or a urea-modified polyisocyanate or isocyanate polymer (A1-2), each of which is preferably used in the adhesive field.

### (Urethane prepolymer (A1-1))

The urethane prepolymer (A1-1) used in the invention is not particularly limited, and a urethane prepolymer used in the adhesive technology field can be used. In general, a urethane prepolymer obtained by reacting an isocyanate composition (i) with a polyol composition (ii) under conditions in which an isocyanate group included in the isocyanate group (i) is excessive with respect to an active hydrogen group included in the polyol composition (ii) is used.

### (Isocyanate composition (i))

The isocyanate composition (i) used in the invention contains an isocyanate compound. The isocyanate compound is not particularly limited, and a compound which can be usually used in the synthesis of the urethane prepolymer can be appropriately used. Examples thereof include an aromatic diisocyanate, an aromatic-aliphatic diisocyanate, an aliphatic diisocyanate, an alicyclic diisocyanate, a biuret product, a nurate product, an adduct product, an allophanate product, a carbodiimide-modified product, or a uretdione-modified product of these diisocyanates, and a urethane prepolymer obtained by reacting these polyisocyanates with a polyol; and these can be used alone or in combination of a plurality of kinds.

Examples of the aromatic diisocyanate include 2,2'-diphenylmethane diisocyanate, 2,4'-diphenylmethane diisocyanate, 4,4'-diphenylmethane diisocyanate (also known as MDI), polymethylene polyphenyl polyisocyanate (also referred to as polymeric MDI or crude MDI), 1,3-phenylene diisocyanate, 4,4'-diphenyldiisocyanate, 1,4-phenylene diisocyanate (also known as PPDI), 2,4-tolylene diisocyanate, 2,6-tolylene diisocyanate (also known as TDI), 4,4'-toluidine diisocyanate, 2,4,6-triisocyanatotoluene, 1,3,5-triisocyanatobenzene, tolidine diisocyanate (also known as TODI), dianisidine diisocyanate, naphthalene diisocyanate (also known as NDI), 4,4'-diphenylether diisocyanate, and 4,4',4"-triphenylmethane triisocyanate, but the invention is not limited thereto.

The aromatic-aliphatic diisocyanate means an aliphatic isocyanate having one or more aromatic rings in the molecule, and examples thereof include m- or p-xylylene diisocyanate (also known as XDI) and α,α,α',α'-tetramethylxylylene diisocyanate (also known as TMXDI), but the invention is not limited thereto.

Examples of the aliphatic diisocyanate include trimethylene diisocyanate, tetramethylene diisocyanate, hexamethylene diisocyanate (another name: HDI), pentamethylene diisocyanate (another name: PDI), 1,2-propylene diisocyanate, 2,3-butylene diisocyanate, 1,3-butylene diisocyanate, dodecamethylene diisocyanate, 2,4,4-trimethylhexamethylene diisocyanate, and lysine diisocyanate (another name: LDI), but the invention is not limited thereto.

Examples of the alicyclic diisocyanate include 3-isocyanatomethyl-3,5,5-trimethylcyclohexylisocyanate, isophorone diisocyanate (also known as IPDI), 1,3-cyclopentane diisocyanate, 1,3-cyclohexane diisocyanate, 1,4-cyclohexane diisocyanate, methyl-2,4-cyclohexane diisocyanate, methyl-2,6-cyclohexane diisocyanate, 4,4'-methylenebiscyclohexylisocyanate (also known as hydrogenated MDI or HMDI), 1,3-bis(isocyanatomethyl)cyclohexane (also known as hydrogenated XDI or HXDI), and norbornane diisocyanate (also known as NBDI), but the invention is not limited thereto.

### (Polyol composition (ii))

The polyol composition (ii) used for synthesizing the urethane prepolymer contains a polyol compound. The polyol compound is not particularly limited, and a compound which can be usually used in the synthesis of the urethane prepolymer can be appropriately used. Examples thereof include glycols such as ethylene glycol, 1,2-propanediol, 1,3-propanediol, 2-methyl-1,3-propanediol, 1,4-butanediol, 1,5-pentanediol, 3-methyl-1,5-pentanediol, 1,6-hexanediol, neopentyl glycol, dimethyl butanediol, butyl ethyl propanediol, diethylene glycol, triethylene glycol, tetraethylene glycol, dipropylene glycol, tripropylene glycol, bis-hydroxyethoxybenzene, 1,4-cyclohexanediol, and 1,4-cyclohexanedimethanol;
tri- or tetrafunctional aliphatic alcohols such as glycerin, trimethylolpropane, and pentaerythritol;
bisphenols such as bisphenol A, bisphenol F, hydrogenated bisphenol A, and hydrogenated bisphenol F; dimer diols;
polyether polyols obtained by addition-polymerizing an alkylene oxide such as ethylene oxide, propylene oxide, butylene oxide, styrene oxide, epichlorohydrin, tetrahydrofuran, and cyclohexylene in the presence of a polymerization initiator such as the glycol and the tri- or tetrafunctional aliphatic alcohol;
polyether urethane polyols obtained by further increasing a molecular weight of the polyether polyol with an isocyanate compound;
a polyester polyol (1) which is a reaction product of a polyester obtained by a ring-opening polymerization reaction of a cyclic ester compound such as propiolactone, butyrolactone, ε-caprolactone, σ-valerolactone, and β-methyl-σ-valerolactone with a polyhydric alcohol such as the glycol, glycerin, trimethylolpropane, and pentaerythritol;
a polyester polyol (2) obtained by reacting a polyvalent carboxylic acid with a bifunctional polyol such as the glycol, dimer diol, and the bisphenol;
a polyester polyol (3) obtained by reacting a tri- or tetrafunctional aliphatic alcohol with a polyvalent carboxylic acid;
a polyester polyol (4) obtained by reacting a bifunctional polyol with the tri- or tetrafunctional aliphatic alcohol and a polyvalent carboxylic acid;
a polyester polyol (5) which is a polymer of a hydroxyl acid such as dimethylolpropionic acid and castor oil fatty acid;
a polyester polyether polyurethane polyol obtained by reacting at least one of the polyester polyols (1) to (5) with a polyether polyol and an isocyanate compound;
a polyester polyurethane polyol obtained by increasing a molecular weight of the polyester polyols (1) to (5) with an isocyanate compound; and
a castor oil, a dehydrated castor oil, a hydrogenated castor oil which is a hydrogenated product of the castor oil, a castor oil-based polyol such as a castor oil adduct with 5 to 50 moles of alkylene oxides, and a mixture thereof.

Examples of the polyvalent carboxylic acid used in the synthesis of the polyester polyols (2) to (4) include aromatic polybasic acids such as orthophthalic acid, terephthalic acid, isophthalic acid, phthalic acid anhydride, 1,4-naphthalene dicarboxylic acid, 2,5-naphthalene dicarboxylic acid, 2,6-naphthalene dicarboxylic acid, 2,3-naphthalene dicarboxylic acid anhydride, naphthalic acid, trimellitic acid, trimellitic acid anhydride, pyromellitic acid, pyromellitic acid anhydride, biphenyldicarboxylic acid, 1,2-bis(phenoxy)ethane-p,p'-dicarboxylic acid, benzophenone tetracarboxylic acid, benzophenone tetracarboxylic acid anhydride, 5-sodium sulfoisophthalic acid, tetrachlorophthalic acid anhydride, and tetrabromo phthalic acid anhydride;
methyl esterification products of an aromatic polycarboxylic acid, such as dimethyl terephthalate and dimethyl 2,6-naphthalenedicarboxylate;
aliphatic polybasic acids such as malonic acid, succinic acid, succinic acid anhydride, glutaric acid, adipic acid, pimelic acid, suberic acid, azelaic acid, sebacic acid, fumaric acid, maleic acid, maleic acid anhydride, and itaconic acid;
alkyl esterification products of an aliphatic polybasic acid, such as dimethyl malonate, diethyl malonate, dimethyl succinate, dimethyl glutarate, dimethyl adipate, diethyl pimelate, diethyl sebacate, dimethyl fumarate, diethyl fumarate, dimethyl maleate, and diethyl maleate; and
alicyclic polybasic acids such as 1,1-cyclopentanedicarboxylic acid, 1,2-cyclopentanedicarboxylic acid, 1,3-cyclopentanedicarboxylic acid, 1,2-cyclohexanedicarboxylic acid, 1,3-cyclohexanedicarboxylic acid, 1,4-cyclohexanedicarboxylic acid, tetrahydrophthalic acid anhydride, 4-methylhexahydrophthalic acid anhydride, hexahydrophthalic acid anhydride, cyclohexane-1,2,4-tricarboxylic acid-1,2-anhydride, himic acid anhydride, and hetic acid anhydride. These may be used alone or in combination of two or more kinds thereof.

As a non-aromatic isocyanate among the isocyanate compounds used for synthesizing the polyurethane polyol, the same isocyanate compound as that used for the isocyanate composition (i) can be used. Examples of the aromatic diisocyanate include 2,2'-diphenylmethane diisocyanate, 2,4'-diphenylmethane diisocyanate, 4,4'-diphenylmethane diisocyanate (also known as MDI), polymethylene polyphenyl polyisocyanate (also referred to as polymeric MDI or crude MDI), 1,3-phenylene diisocyanate, 4,4'-diphenyldiisocyanate, 1,4-phenylene diisocyanate (also known as PPDI), 2,4-tolylene diisocyanate, 2,6-tolylene diisocyanate (also known as TDI), 4,4'-toluidine diisocyanate, 2,4,6-triisocyanatotoluene, 1,3,5-triisocyanatobenzene, tolidine diisocyanate (also known as TODI), dianisidine diisocyanate, naphthalene diisocyanate (also known as NDI), 4,4'-diphenylether diisocyanate, 4,4',4"-triphenylmethane triisocyanate, and derivatives (a biuret product, a nurate product, an adduct product, an allophanate product, and the like) of these diisocyanates, but the present invention is not limited thereto.

The polyol compound preferably includes at least one of the polyether polyol or the polyester polyol.

The urethane prepolymer (A1-1) is obtained by reacting the isocyanate composition (i) with the polyol composition (ii) under conditions in which an isocyanate group included in the isocyanate group (i) is excessive with respect to an active hydrogen group included in the polyol composition (ii). An equivalent ratio [NCO]/[Active hydrogen group] of the isocyanate group to the active hydrogen group included in the polyol composition (ii) can be appropriately adjusted according to the purpose, and it is, for example, 2.0 or more and 20.0 or less.

The molecular weight of the urethane prepolymer (A1-1) is more than 280, and the upper limit thereof is 50,000, in terms of a number-average molecular weight. The lower limit thereof is more preferably more than 300, and the upper limit thereof is more preferably 30,000 or less.

### (Urea-modified polyisocyanate or isocyanate polymer (A1-2))

Specifically, the urea-modified polyisocyanate or isocyanate polymer (A1-2) is a compound in which an isocyanate monomer is bonded through a structure selected from a urea structure, a biuret structure, a uretdione bond, a nurate structure, a carbodiimide structure, or the like.

The isocyanate monomer used herein can be the isocyanate monomer used in the urethane prepolymer (A1-1) described above, and specific examples thereof include aromatic diisocyanates such as 2,2'-diphenylmethane diisocyanate, 2,4'-diphenylmethane diisocyanate, 4,4'-diphenylmethane diisocyanate (also known as MDI), polymethylene polyphenyl polyisocyanate (also referred to as polymeric MDI or crude MDI), 1,3-phenylene diisocyanate, 4,4'-diphenyldiisocyanate, 1,4-phenylene diisocyanate (also known as PPDI), 2,4-tolylene diisocyanate, 2,6-tolylene diisocyanate (also known as TDI), 4,4'-toluidine diisocyanate, 2,4,6-triisocyanatotoluene, 1,3,5-triisocyanatobenzene, tolidine diisocyanate (also known as TODI), dianisidine diisocyanate, naphthalene diisocyanate (also known as NDI), 4,4'-diphenylether diisocyanate, and 4,4',4"-triphenylmethane triisocyanate;
aromatic-aliphatic diisocyanates such as m- or p-xylylene diisocyanate (also known as XDI) and α,α,α',α'-tetramethylxylylene diisocyanate (also known as TMXDI);
aliphatic diisocyanates such as trimethylene diisocyanate, tetramethylene diisocyanate, hexamethylene diisocyanate (another name: HDI), pentamethylene diisocyanate (another name: PDI), 1,2-propylene diisocyanate, 2,3-butylene diisocyanate, 1,3-butylene diisocyanate, dodecamethylene diisocyanate, 2,4,4-trimethylhexamethylene diisocyanate, and lysine diisocyanate (another name: LDI);
alicyclic diisocyanates such as 3-isocyanatomethyl-3,5,5-trimethylcyclohexylisocyanate, isophorone diisocyanate (also known as IPDI), 1,3-cyclopentane diisocyanate, 1,3-cyclohexane diisocyanate, 1,4-cyclohexane diisocyanate, methyl-2,4-cyclohexane diisocyanate, methyl-2,6-cyclohexane diisocyanate, 4,4'-methylenebiscyclohexylisocyanate (also known as hydrogenated MDI or HMDI), 1,3-bis(isocyanatomethyl)cyclohexane (also known as hydrogenated XDI or HXDI), and norbornane diisocyanate (also known as NBDI).

Examples of the urea-modified polyisocyanate include a polyisocyanate having a biuret structure or a urea structure. The number-average molecular weight thereof is preferably more than 280, and the upper limit thereof is preferably 2,000 or less. The lower limit thereof is more preferably more than 300 and still more preferably more than 350. The upper limit thereof is preferably 1,800 or less and more preferably 1,500 or less.

Examples of the isocyanate polymer include a polyisocyanate having a uretdione structure or a nurate structure. The number-average molecular weight thereof is preferably more than 280, and the upper limit thereof is preferably 2,000 or less. The lower limit thereof is more preferably more than 300 and still more preferably more than 350. The upper limit thereof is preferably 1,800 or less and more preferably 1,500 or less.

In the invention, it is preferable that the polyisocyanate-containing composition contains a polyisocyanate having a uretdione structure or a urea structure. A compound represented by general formula (1) and satisfying (1) and (2) is particularly preferable.

(R₁) ₂-R₂ (1)

In the general formula (1), Ri is a residue excluding an isocyanate group of one diisocyanate compound selected from the group consisting of an aromatic diisocyanate, an aromatic-aliphatic diisocyanate, an aliphatic diisocyanate, and an alicyclic diisocyanate, and R₂ represents a uretdione group or a urea group.
(1) the compound represented by the general formula (1) has a number-average molecular weight in a range of more than 280 and 600 or less.
(2) the compound represented by the general formula (1) is contained in an amount of 0.001% by mass or more and 30% by mass or less with respect to the solid content of the polyisocyanate composition (X).

In addition, the compound represented by the general formula (1) may have slightly low compatibility with the isocyanate compound (A1) other than the compound represented by the general formula (1), and in a case where the content thereof is high, turbidity may occur in the polyisocyanate composition. Therefore, the compound represented by the general formula (1) is preferably contained in an amount in a range of 0.005% by mass or more and 20% by mass or less, more preferably contained in an amount in a range of 0.01% by mass or more and 10% by mass or less, and still more preferably contained in an amount in a range of 0.01% by mass or more and 3% by mass or less with respect to the solid content of the polyisocyanate composition (X).

The molecular weight of the urea-modified polyisocyanate or isocyanate polymer (A1-2) is preferably more than 280 and 2,000 or less in terms of a number-average molecular weight. The lower limit thereof is more preferably more than 300 and still more preferably more than 350. The upper limit thereof is preferably 1,800 or less and more preferably 1,500 or less.

### (Others)

In addition, as the isocyanate compound (A1), a polymeric diphenylmethane diisocyanate, a polyisocyanate having an allophanate structure, or the like may be used.

### (Combination of isocyanate compound (A1))

The isocyanate compound (A1) can be used in combination of a plurality of compounds corresponding to the isocyanate compound (A1) depending on the application. Examples of specific aspects thereof are shown below, but the present invention is not limited thereto and can be used in various combinations.

(I) a compound corresponding to the urethane prepolymer (A1-1) is contained alone or in combination.
(II) a compound corresponding to the urea-modified polyisocyanate or isocyanate polymer (A1-2) is contained alone or in combination.
(III) a compound corresponding to the urethane prepolymer (A1-1) is contained alone or in combination, and a compound corresponding to the urea-modified polyisocyanate or isocyanate polymer (A1-2) is contained alone or in combination.
(IV) a compound corresponding to the urethane prepolymer (A1-1) is contained alone or in combination, and the compound represented by the general formula (1), which is a polyisocyanate having a uretdione structure or a urea structure, is contained.
(V) a compound corresponding to the urea-modified polyisocyanate or isocyanate polymer (A1-2) is contained alone or in combination, and the compound represented by the general formula (1), which is a polyisocyanate having a uretdione structure or a urea structure, is contained.
(VI) a compound corresponding to the urethane prepolymer (A1-1) is contained alone or in combination, a compound corresponding to the urea-modified polyisocyanate or isocyanate polymer (A1-2) is contained alone or in combination, and the compound represented by the general formula (1), which is a polyisocyanate having a uretdione structure or a urea structure, is contained.

In particular, in a case of the combination in which the compound corresponding to the urethane prepolymer (A1-1) is used alone or in combination and the compound corresponding to the urea-modified polyisocyanate or isocyanate polymer (A1-2) is contained alone or in combination as in (III), or in a case of the combination in which the compound represented by the general formula (1), which is a polyisocyanate having a uretdione structure or a urea structure, is contained as in (IV) and (VI), various preferred effects can be expected depending on the added amount of the urea-modified polyisocyanate or isocyanate polymer (A1-2) or the added amount of the compound represented by the general formula (1), which is a polyisocyanate having a uretdione structure or a urea structure.

For example, the isocyanate group has extremely high reactivity and may react even with moisture in the air, which may cause an increase in viscosity during storage and a short usable time. In a case where the compound represented by the general formula (1), which has higher reactivity with water than the urethane prepolymer (A1-1), is contained, an effect (moisture catcher) of reacting selectively with the moisture and suppressing the increase in viscosity can be expected. Since such an effect of the moisture catcher can be exhibited even in a case where the compound represented by the general formula (1) is contained in an extremely small amount, the added amount of the compound represented by the general formula (1) in a case of expecting this effect may be 0.001% by mass or more with respect to the solid content of the isocyanate composition according to the invention, and may be preferably 0.01% by mass or more.

It is preferable that an isocyanate compound used for synthesizing the compound represented by the general formula (1) is an isocyanate compound having reactivity equal to or higher than the isocyanate compound used for synthesizing the urethane prepolymer (A1-1).

Specifically, in a case where the isocyanate compound used for synthesizing the urethane prepolymer (A1-1) is an aromatic diisocyanate, it is preferable that the isocyanate compound used for synthesizing the compound represented by the general formula (1) is also an aromatic diisocyanate.

In a case where the isocyanate compound used for synthesizing the urethane prepolymer (A1-1) is an aromatic-aliphatic diisocyanate, it is preferable that the isocyanate compound used for synthesizing the compound represented by the general formula (1) is selected from an aromatic diisocyanate or an aromatic-aliphatic diisocyanate.

In a case where the isocyanate compound used for synthesizing the urethane prepolymer (A1-1) is an aliphatic diisocyanate, it is preferable that the isocyanate compound used for synthesizing the compound represented by the general formula (1) is selected from an aromatic diisocyanate, an aromatic-aliphatic diisocyanate, or an aliphatic diisocyanate.

In a case where the isocyanate compound used for synthesizing the urethane prepolymer (A1-1) is an alicyclic diisocyanate, it is sufficient that the isocyanate compound used for synthesizing the compound represented by the general formula (1) is selected from an aromatic diisocyanate, an aromatic-aliphatic diisocyanate, an aliphatic diisocyanate, or an alicyclic diisocyanate.

The same effect of suppressing the increase in viscosity can be expected even in a case where the isocyanate polymer includes the compound represented by the general formula (1). In this case as well, it is preferable that an isocyanate compound used for synthesizing the compound represented by the general formula (1) is an isocyanate compound having reactivity equal to or higher than the isocyanate compound used for synthesizing the isocyanate polymer.

Specifically, in a case where the isocyanate compound used for synthesizing the isocyanate polymer is an aromatic diisocyanate, it is preferable that the isocyanate compound used for synthesizing the compound represented by the general formula (1) is also an aromatic diisocyanate.

In a case where the isocyanate compound used for synthesizing the isocyanate polymer is an aromatic-aliphatic diisocyanate, it is preferable that the isocyanate compound used for synthesizing the compound represented by the general formula (1) is selected from an aromatic diisocyanate or an aromatic-aliphatic diisocyanate.

In a case where the isocyanate compound used for synthesizing the isocyanate polymer is an aliphatic diisocyanate, it is preferable that the isocyanate compound used for synthesizing the compound represented by the general formula (1) is selected from an aromatic diisocyanate, an aromatic-aliphatic diisocyanate, or an aliphatic diisocyanate.

In a case where the isocyanate compound used for synthesizing the isocyanate polymer is an alicyclic diisocyanate, it is sufficient that the isocyanate compound used for synthesizing the compound represented by the general formula (1) is selected from an aromatic diisocyanate, an aromatic-aliphatic diisocyanate, an aliphatic diisocyanate, or an alicyclic diisocyanate.

In a case where the isocyanate compound (A1) is an isocyanate polymer, particularly a polyisocyanate having a nurate structure, the effect of suppressing the increase in viscosity is more excellent, which is preferable. An isocyanate used for synthesizing the polyisocyanate having a nurate structure is preferably at least one selected from the group consisting of an aromatic-aliphatic diisocyanate, an alicyclic diisocyanate, and an aliphatic diisocyanate, and more preferably includes at least one selected from an alicyclic diisocyanate or an aliphatic diisocyanate.

As another effect by containing the compound represented by the general formula (1), which is a polyisocyanate having a uretdione structure or a urea structure, effects caused by a cohesive force of the adhesive, such as pinhole resistance, heat seal strength, aluminum adhesiveness, zipper heat seal resistance, boil resistance, and heat resistance, can also be expected. That is, since the urethane prepolymer (A1-1) has a chain derived from a polyol between isocyanate groups, a crosslinking density of a cured adhesive film to be obtained is not significantly increased. However, by containing the general formula (1) which is a polyisocyanate having a uretdione structure or a urea structure, a complex crosslinking density structure is formed in the cured coating film of the adhesive, and the cohesive force can be expected to be improved. Since such an effect of improving the cohesive force can be exhibited even in a case where the general formula (1) which is a polyisocyanate having a uretdione structure or a urea structure is contained in an extremely small amount, the added amount of the general formula (1) which is a polyisocyanate having a uretdione structure or a urea structure in a case of expecting this effect may be 0.001% by mass or more with respect to the solid content of the isocyanate composition according to the invention, and may be preferably 0.01% by mass or more. In this case, since the cohesive force of the adhesive is more easily improved, the isocyanate composition (i) used for synthesizing the urethane prepolymer (A1-1) preferably contains at least one selected from an aromatic diisocyanate, an aromatic-aliphatic diisocyanate, or an alicyclic diisocyanate, more preferably contains at least one selected from an aromatic diisocyanate or an aromatic-aliphatic diisocyanate, and is still more preferably an aromatic diisocyanate. The aromatic diisocyanate is more preferably toluene diisocyanate.

### (Isocyanate monomer (A2) having number-average molecular weight of 140 to 280)

The isocyanate monomer (A2) used in the invention can be used without any particular limitation as long as it has a number-average molecular weight of 140 to 280.

Specific examples thereof include, as an aromatic diisocyanate, 2,2'-diphenylmethane diisocyanate, 2,4'-diphenylmethane diisocyanate, 4,4'-diphenylmethane diisocyanate (also known as MDI), 1,3-phenylene diisocyanate, 4,4'-diphenyl diisocyanate, 1,4-phenylene diisocyanate (also known as PPDI), 2,4-tolylene diisocyanate, 2,6-tolylene diisocyanate (also known as TDI),tolidine diisocyanate (also known as TODI), and naphthalene diisocyanate (also known as NDI), but the invention is not limited thereto.

The aromatic-aliphatic diisocyanate means an aliphatic isocyanate having one or more aromatic rings in the molecule, and examples thereof include m- or p-xylylene diisocyanate (also known as XDI) and α,α,α',α'-tetramethylxylylene diisocyanate (also known as TMXDI), but the invention is not limited thereto.

Examples of the aliphatic diisocyanate include trimethylene diisocyanate, tetramethylene diisocyanate, hexamethylene diisocyanate (another name: HDI), pentamethylene diisocyanate (another name: PDI), 1,2-propylene diisocyanate, 2,3-butylene diisocyanate, 1,3-butylene diisocyanate, dodecamethylene diisocyanate, 2,4,4-trimethylhexamethylene diisocyanate, and lysine diisocyanate (another name: LDI), but the invention is not limited thereto.

Examples of the alicyclic diisocyanate include isophorone diisocyanate (also known as IPDI), 1,3-cyclopentane diisocyanate, 1,3-cyclohexane diisocyanate, 1,4-cyclohexane diisocyanate, methyl-2,4-cyclohexane diisocyanate, methyl-2,6-cyclohexane diisocyanate, 4,4'-methylenebiscyclohexylisocyanate (also known as hydrogenated MDI or HMDI), 1,4-bis(isocyanatomethyl)cyclohexane or 1,3-bis(isocyanatomethyl)cyclohexane (also known as hydrogenated XDI or HXDI), and norbornane diisocyanate (also known as NBDI), but the invention is not limited thereto.

The polyisocyanate composition (X) used in the invention contains the isocyanate compound (A1) and the isocyanate monomer (A2), in which the blending amount of the isocyanate monomer (A2) is 0.001% by mass or more and 0.1% by mass or less with respect to the solid content. Here, the solid content represents a solid content of the polyisocyanate composition. For example, in a case where the polyisocyanate composition consists of the isocyanate compound (A) and the isocyanate monomer (A2), the solid content is the sum of the mass of the urethane prepolymer (A1-1) and the mass of the isocyanate monomer (A2).

The lower limit of the blending amount of the isocyanate monomer (A2) is preferably 0.005% by mass or more, and most preferably 0.01% by mass or more with respect to the solid content. In this range, a cured film having excellent balance of the crosslinking point density is obtained; and a two-liquid curable adhesive which maintains an adhesive function comparable to that of a currently available urethane-reactive two-liquid curable adhesive, is capable of following a base material even in a case where the base material is a flexible plastic or paper, and has excellent strength is obtained.

The blending amount of the isocyanate monomer (A2) can be measured by gas chromatography using an internal standard, for example, according to ASTM D 3432. Alternatively, the blending amount of the isocyanate monomer (A2) can also be measured by liquid chromatography according to the following conditions.

### [Measurement condition]

Apparatus: "ACQUITY UPLC H-Class" manufactured by Waters Corporation
Data processing: "Empower-3" manufactured by Waters Corporation
Column: "ACQUITY UPLC HSS T3" manufactured by Waters Corporation; 100 mm × 2.1 mmϕ, 1.8 µm, 40°C
Eluent: ammonium formate aqueous solution/methanol, 0.3 mL/min
Detector: PDA
Sample adjustment
1. 100 mg of a sample appropriately blocked was dissolved in 10 ml of THF (for LC).
2. stirred with a vortex for 30 seconds.
3. diluted with the eluent (mobile phase).
4. passed through a 0.2 µm filter, and the filtrate was used as a measurement sample.
Calculation of area ratio: calculated using the maximum absorption wavelength with respect to the target substance.

### (Viscosity)

In a case where the adhesive according to the invention is used as a solvent-free two-liquid curable adhesive, the viscosity of the polyisocyanate composition (X) is adjusted to a suitable range for a non-solvent lamination method. As an example, the viscosity at 40°C is adjusted to be in a range of 100 to 20,000 mPas, preferably in a range of 500 to 10,000 mPas. The viscosity of the polyisocyanate composition (X) can be adjusted by the blending amount of the urethane prepolymer or the isocyanate monomer, for example. The viscosity of the polyisocyanate composition (X) can be measured, for example, using a rotational viscometer under the following conditions: cone-plate: 1° × diameter of 50 mm, shear rate: 100 sec⁻¹, and 40°C ± 1°C.

### (Method for producing polyisocyanate composition (X))

The polyisocyanate composition (X) used in the invention can be obtained by mixing the isocyanate compound (A1) and the isocyanate monomer (A2).

In addition, in a case where the isocyanate monomer (A2) is one of raw materials of the isocyanate compound (A1), the isocyanate monomer (A2) remaining after the synthesis of the isocyanate compound (A1) may be adjusted to be 0.001% by mass or more and 0.1% by mass or less with respect to the solid content of the composition. In addition, these methods may be combined.

In a case where the isocyanate compound (A1) and the isocyanate monomer (A2) are mixed, the mixing is performed using a known stirrer or the like to obtain the polyisocyanate composition (X).

In addition, in a case where the isocyanate monomer (A2) remaining after the synthesis of the isocyanate compound (A1) is adjusted to be 0.001% by mass or more and 0.1% by mass or less with respect to the solid content of the composition, the isocyanate monomer (A2) after the synthesis of the isocyanate compound (A1) is adjusted to be 0.001% by mass or more and 0.1% by mass or less with respect to the solid content using a short path evaporator or a thin film distillator.

In the invention, among these, a method in which the isocyanate compound (A1) is synthesized and then the isocyanate monomer (A2) is adjusted to be 0.001% by mass or more and 0.1% by mass or less with respect to the solid content of the composition using a short path evaporator or a thin film distillator is simple and preferable.

### (Polyol composition (Y))

The polyol composition (Y) contains a polyol compound (B) having a plurality of hydroxyl groups. The polyol compound (B) is not particularly limited, and any polyol compound normally used in a urethane-reactive two-liquid curable adhesive can be used.

Specific examples thereof include a polyether polyol, a polyester polyol, a polyester polyether polyol, a polyurethane polyol, a polyester polyurethane polyol, a polyether polyurethane polyol, a vegetable oil polyol, a sugar alcohol, a polycarbonate polyol, an acrylic polyol, a hydroxyl group-containing olefin resin, a hydroxyl group-containing fluorine resin, and a (poly)alkanolamine.

Examples of the polyether polyol include glycols such as ethylene glycol, propylene glycol, 1,3-propanediol, 1,4-butanediol, 1,5-pentanediol, 3-methyl-1,5-pentanediol, 1,6-hexanediol, neopentyl glycol, methylpentanediol, dimethyl butanediol, butyl ethyl propanediol, diethylene glycol, triethylene glycol, tetraethylene glycol, dipropylene glycol, tripropylene glycol, bishydroxyethoxybenzene, 1,4-cyclohexanediol, 1,4-cyclohexanedimethanol, and triethylene glycol; and a compound obtained by addition-polymerizing an alkylene oxide such as ethylene oxide, propylene oxide, butylene oxide, styrene oxide, epichlorohydrin, tetrahydrofuran, and cyclohexylene in the presence of a polymerization initiator, for example, a tri- or tetrafunctional aliphatic alcohol such as glycerin, trimethylolpropane, pentaerythritol, and polypropylene glycol. It is preferable to use polypropylene glycol.

The polyester polyol is a reaction product of a polyhydric alcohol and a polyvalent carboxylic acid. The polyhydric alcohol used in the synthesis of the polyester polyol may be a diol or a tri- or higher functional polyol. In addition, a polyester polyether polyol in which the polyether polyol is used as a diol, or a polyester polyurethane polyol in which a polyurethane polyol described later is used as a diol may be used.

Examples of the diol include aliphatic diols such as ethylene glycol, diethylene glycol, propylene glycol, 1,3-propanediol, 1,2,2-trimethyl-1,3-propanediol, 2,2-dimethyl-3-isopropyl-1,3-propanediol, 1,4-butanediol, 1,3-butanediol, 3-methyl-1,3-butanediol, 1,5-pentanediol, 3-methyl1,5-pentanediol, neopentyl glycol, 1,6-hexanediol, 1,4-bis(hydroxymethyl)cyclohexane, and 2,2,4-trimethyl-1,3-pentanediol;
ether glycols such as polyoxyethylene glycol and polyoxypropylene glycol;
modified polyether diols obtained by a ring-opening polymerization of the aliphatic diol with various cyclic ether bond-containing compounds such as ethylene oxide, propylene oxide, tetrahydrofuran, ethyl glycidyl ether, propyl glycidyl ether, butyl glycidyl ether, phenyl glycidyl ether, and allyl glycidyl ether;
lactone-based polyester polyols obtained by a polycondensation reaction of the aliphatic diol with various lactones such as lactanoid and ε-caprolactone;
bisphenols such as bisphenol A and bisphenol F; and
alkylene oxide adducts of bisphenol, obtained by adding ethylene oxide, propylene oxide, or the like to a bisphenol such as bisphenol A and bisphenol F.

Examples of the tri- or higher functional polyol include aliphatic polyols such as trimethylolethane, trimethylolpropane, glycerin, hexanetriol, and pentaerythritol;
modified polyether polyols obtained by a ring-opening polymerization of the aliphatic polyol with various cyclic ether bond-containing compounds such as ethylene oxide, propylene oxide, tetrahydrofuran, ethyl glycidyl ether, propyl glycidyl ether, butyl glycidyl ether, phenyl glycidyl ether, and allyl glycidyl ether; and
lactone-based polyester polyols obtained by a polycondensation reaction of the aliphatic polyol with various lactones such as ε-caprolactone.

Examples of the polyvalent carboxylic acid used in the synthesis of the polyester polyol include aliphatic dicarboxylic acids such as succinic acid, adipic acid, azelaic acid, sebacic acid, dodecanedicarboxylic acid, maleic acid anhydride, fumaric acid, 1,3-cyclopentanedicarboxylic acid, and 1,4-cyclohexanedicarboxylic acid; aromatic dicarboxylic acids such as orthophthalic acid, isophthalic acid, terephthalic acid, 1,4-naphthalene dicarboxylic acid, 2,5-naphthalene dicarboxylic acid, 2,6-naphthalenedicarboxylic acid, naphthalic acid, biphenyldicarboxylic acid, and 1,2-bis(phenoxy)ethane-p,p'-dicarboxylic acid; anhydrides of these aliphatic or dicarboxylic acids or ester-forming derivatives thereof; and polybasic acids such as p-hydroxybenzoic acid, p-(2-hydroxyethoxy)benzoic acid, ester-forming derivatives of these dihydroxycarboxylic acids, and dimer acid.

Examples of the vegetable oil polyol include a castor oil, a dehydrated castor oil, a hydrogenated castor oil which is a hydrogenated product of the castor oil, and a castor oil adduct with 5 to 50 moles of alkylene oxides.

The polyurethane polyol is a reaction product of a low-molecular-weight or high-molecular-weight polyol and a polyisocyanate compound. As the low-molecular-weight polyol, the same polyhydric alcohol mentioned as a raw material for the polyester polyol can be used. Examples of the high-molecular-weight polyol include a polyether polyol and a polyester polyol. As the polyisocyanate compound, the same polyisocyanate as that used in the urethane prepolymer (A1-1) can be used.

Examples of the sugar alcohol include pentaerythritol, sucrose, xylitol, sorbitol, isomalt, lactitol, maltitol, and mannitol sugar.

### (Amine compound (C))

The polyol composition (Y) contains an amine compound (C) having an amino group. In the present specification, the amino group refers to an NH2 group or an NHR group (R represents an alkyl group or an aryl group, which may have a functional group).

The amine compound (C) is not particularly limited and a known amine compound can be used, and examples thereof include methylenediamine, ethylenediamine, isophorone diamine, 3,9-dipropaneamine-2,4,8,10-tetraoxaspirodecane, lysine, 2,2,4-trimethylhexamethylene diamine, hydrazine, piperazine, 2-hydroxyethylethylene diamine, di-2-hydroxyethylethylene diamine, di-2-hydroxyethylpropylene diamine, 2-hydroxypropylethylene diamine, di-2-hydroxypropylethylene diamine, polypropylene glycol)diamine, polypropylene glycol)triamine, polypropylene glycol)tetramine, 1,2-diaminopropane, 1,3-diaminopropane,
1,4-diaminobutane, 1,5-diaminopentane, 1,6-diaminohexane, 1,7-diaminoheptane, 1,8-diaminooctane, 1,9-diaminononane, 1,10-diaminodecane, diethylene triamine, dipropylene triamine, triethylene tetramine, tripropylene tetramine, tetraethylene pentamine, tetrapropylene pentamine, pentaethylene hexamine, nonaethylene decamine, trimethylhexamethylene diamine, tetra(aminomethyl)methane, tetrakis(2-aminoethylaminomethyl)methane, 1,3-bis(2'-aminoethylamino)propane, triethylenebis(trimethylene)hexamine, bis(3-aminoethyl)amine, bishexamethylene triamine, 1,4-cyclohexane diamine, 4,4'-methylenebiscyclohexylamine, 4,4'-isopropylidenebiscyclohexylamine, norbornane diamine,
bis(aminomethyl)cyclohexane, diaminodicyclohexylmethane, isophorone diamine, menthanediamine, bis(cyanoethyl)diethylenetriamine, 1,4-bis-(8-aminopropyl)-piperazine, piperazine-1,4-diazacycloheptane, 1-(2'-aminoethylpiperazine), 1-[2'-(2"-aminoethylamino)ethyl]piperazine, tricyclodecanediamine, an amine compound (C1) having a plurality of amino groups, such as polyureaamine, which is a reaction product of the various polyamines and the various isocyanate components,
primary or secondary alkanolamines (C2) such as monoethanolamine, monoisopropanolamine, monobutanolamine, N-methylethanolamine, N-ethylethanolamine, N-methylpropanolamine, diethanolamine, and diisopropanolamine, and
primary or secondary amines (C3) such as ethylamine, octylamine, laurylamine, myristylamine, stearylamine, oleylamine, diethylamine, dibutylamine, and distearylamine.

As a blending amount of the amine compound (C), the amine compound (C) is blended such that the amine value of the polyol composition (Y) is preferably 20 to 70 mgKOH/g and more preferably 25 to 50 mgKOH/g.

The amine value in the present specification means the milligram number of KOH equivalent to the amount of HCl required to neutralize 1 g of the sample, and it is not particularly limited and can be calculated by a known method. In a case where the chemical structure of the amine compound (C) is known, and further, in a case where the average molecular weight or the like thereof is known, the amine value can be calculated from (Number of amino groups per molecule/Average molecular weight) × 56.1 × 1000. In a case where the chemical structure, the average molecular weight, or the like of the amine compound is unknown, the amine value can be measured according to a known amine value measuring method, for example, JIS K 7237-1995.

In a case where the two-liquid curable adhesive according to the invention is used as a solvent-free type, the viscosity of the polyol composition (Y) is adjusted to a range suitable for the non-solvent lamination method. As an example, the viscosity at 40°C is adjusted to be in a range of 100 to 5,000 mPas, preferably in a range of 100 to 3,000 mPas. The viscosity of the polyol composition (Y) can be adjusted by the skeleton of the polyol compound (B), a plasticizer described later, or the like. In a case of adjusting the viscosity by the skeleton of the polyol compound (B), for example, the viscosity can be reduced using a polypropylene glycol or a polyester polyol obtained by a reaction of an aliphatic carboxylic acid and a polyol. Alternatively, the viscosity can be increased using a polyester polyol obtained by a reaction of an aromatic carboxylic acid and a polyol.

### (Other components of adhesive)

The two-liquid curable adhesive according to the invention may contain a component other than the above-described components. The other components may be contained in any of the polyisocyanate composition (X) or the polyol composition (Y),or in both of them, or may be separately adjusted and used by being mixed with the polyisocyanate composition (X) and the polyol composition (Y) immediately before the coating with the adhesive. Hereinafter, each component will be described.

### (Monool compound (D))

The polyol composition (Y) may contain a monool compound (D) having one alcoholic hydroxyl group. The main chain of the monool compound (D) is not particularly limited, and examples thereof include a vinyl resin having one hydroxyl group, an acrylic resin, a polyester, an epoxy resin, and a urethane resin. In addition, an aliphatic alcohol, an alkyl alkylene glycol, or the like can also be used. The main chain of the monool compound (D) may be linear or branched. A bonding position of the hydroxyl group is not particularly limited, but it is preferable that the hydroxyl group is present at the terminal of the molecular chain.

Specific examples of the monool compound (D) include aliphatic monools such as methanol, ethanol, propanol, butanol, pentanol, hexanol, heptanol, octanol, nonanol, decanol, lauryl alcohol, myristyl alcohol, pentadecanol, cetyl alcohol, heptadecanol, stearyl alcohol, nonadecanol, and other alkanols (C20 to 50), and oleyl alcohol, and isomers thereof;
alicyclic monools such as cyclohexanol, methylcyclohexanol, 4-butylcyclohexanol, 4-pentylcyclohexanol, 4-hexylcyclohexanol, cyclodecanol, cyclododecanol, cyclotetradecanol, 4-isopropylcyclohexanol, 3,5,5-trimethylcyclohexanol, menthol, 2-norbornanol, borneol, 2-adamantanols, dicyclohexylmethanol, decanol, 2-cyclohexylcyclohexanol, 4-cyclohexylcyclohexanol, 4-(4-propylcyclohexyl)cyclohexanol, 4-(4-pentylcyclohexyl)cyclohexanol, α-ambrinol, deoxycorticosterone, 11-dehydrocorticosterone, cholesterol, β-sitosterol, campesterol, stigmasterol, brassicasterol, lanosterol, ergosterol, β-cholestanol, testosterone, estrone, diosgenin, dehydroepiandrosterone, coprostanol, pregnenolone, epicolestanol, 7-dehydrocholesterol, estradiol benzoate, chigogenin, hecogenin, methandienone, cortisone acetate, and stenolone, and isomers thereof;
aromatic-aliphatic monools such as benzyl alcohol; and
polyoxyalkylene monools obtained by a ring-opening addition polymerization of an alkylene oxide such as ethylene oxide, propylene oxide, butylene oxide, and tetrahydrofuran using an alkyl compound containing one active hydrogen, and the like as an initiator.

### (Catalyst)

Examples of the catalyst include a metal-based catalyst, an amine-based catalyst, an aliphatic cyclic amide compound, and a quaternary ammonium salt.

Examples of the metal-based catalyst include a metal complex-based catalyst, an inorganic metal-based catalyst, and an organic metal-based catalyst. Examples of the metal complex-based catalyst include acetylacetonate salts of a metal selected from the group consisting of Fe (iron), Mn (manganese), Cu (copper), Zr (zirconium), Th (thorium), Ti (titanium), Al (aluminum), and Co (cobalt), such as iron acetylacetonate, manganese acetylacetonate, copper acetylacetonate, and zirconia acetylacetonate.

Examples of the inorganic metal-based catalyst include catalysts selected from Sn, Fe, Mn, Cu, Zr, Th, Ti, Al, Co, and the like.

Examples of the organic metal-based catalyst include organic zinc compounds such as zinc octylate, zinc neodecanoate, and zinc naphthenate; organic tin compounds such as stannous diacetate, stannous dioctoate, stannous dioleate, stannous dilaurate, dibutyltin diacetate, dibutyltin dilaurate, dioctyltin dilaurate, dibutyltin oxide, and dibutyltin dichloride; organic nickel compounds such as nickel octylate and nickel naphthenate; organic cobalt compounds such as cobalt octylate and cobalt naphthenate; organic bismuth compounds such as bismuth octylate, bismuth neodecanoate, and bismuth naphthenate; and titanium-based compounds such as tetraisopropyl orthotitanate, dibutyl titanium dichloride, tetrabutyl titanate, butoxy titanium trichloride, and a titanium chelate complex having at least one of aliphatic diketone, aromatic diketone, or alcohol having 2 to 10 carbon atoms as a ligand.

Examples of the amine-based catalyst include triethylenediamine, 2-methyltriethylenediamine, quinuclidine, 2-methylquinuclidine, N,N,N',N'-tetramethylethylenediamine, N,N,N',N'-tetramethylpropylenediamine, N,N,N',N",N"-pentamethyldiethylenetriamine, N,N,N',N",N"-pentamethyl-(3-aminopropyl)ethylenediamine, N,N,N',N",N"-pentamethyldipropylenetriamine, N,N,N',N'-tetramethylhexamethylenediamine, bis(2-dimethylaminoethyl) ether, dimethylethanolamine, dimethylisopropanolamine, dimethylaminoethoxyethanol, N,N-dimethyl-N'-(2-hydroxyethyl)ethylenediamine, N,N-dimethyl-N'-(2-hydroxyethyl)propanediamine, bis(dimethylaminopropyl)amine, bis(dimethylaminopropyl)isopropanolamine, 3-quinuclidinol, N,N,N',N'-tetramethylguanidine, 1,3,5-tris(N,N-dimethylaminopropyl)hexahydro-S-triazine, 1,8-diazabicyclo[5.4.0]undecene-7, N-methyl-N'-(2-dimethylaminoethyl)piperazine, N,N'-dimethylpiperazine, dimethylcyclohexylamine, N-methylmorpholine, N-ethylmorpholine, 1-methylimidazole, 1,2-dimethylimidazole, 1-isobutyl-2-methylimidazole, 1-dimethylaminopropylimidazole, N,N-dimethylhexanolamine, N-methyl-N'-(2-hydroxyethyl)piperazine, 1-(2-hydroxyethyl)imidazole, 1-(2-hydroxypropyl)imidazole, 1-(2-hydroxyethyl)-2-methylimidazole, and 1-(2-hydroxypropyl)-2-methylimidazole.

Examples of the aliphatic cyclic amide compound include δ-valerolactam, ε-caprolactam, ω-enantholactam, η-capryllactam, and β-propionolactam. Among these, ε-caprolactam is more effective by curing acceleration.

Examples of the quaternary ammonium salt include hydroxy salts such as alkylammonium and aromatic ammonium, alkylate salts, and halide salts. Examples thereof include tetramethylammonium hydroxide, tetraethylammonium hydroxide, tetrapropylammonium hydroxide, tetrabutylammonium hydroxide, benzyltrimethylammonium hydroxide, tetrabutylammonium fluoride, tetrabutylammonium chloride, tetrabutylammonium bromide, tetrabutylammonium iodide, benzyltriethylammonium chloride, and hexadecyltrimethylammonium bromide, but the invention is not limited thereto.

### (Acid anhydride)

Examples of an acid anhydride include cyclic aliphatic acid anhydrides, aromatic acid anhydrides, and unsaturated carboxylic acid anhydrides, and one or two or more kinds thereof can be used in combination. More specific examples thereof include phthalic acid anhydride, trimellitic acid anhydride, pyromellitic acid anhydride, benzophenone tetracarboxylic acid anhydride, dodecenylsuccinic acid anhydride, polyadipic acid anhydride, polyazelainic acid anhydride, polysebacic acid anhydride, poly(ethyl octadecanedioate) anhydride, poly(phenylhexadecanedioate) anhydride, tetrahydrophthalic acid anhydride, methyl tetrahydrophthalic acid anhydride, methyl hexahydrophthalic acid anhydride, hexahydrophthalic acid anhydride, methyl himic acid anhydride, trialkyl tetrahydrophthalic acid anhydride, methyl cyclohexenedicarboxylic acid anhydride, methyl cyclohexenetetracarboxylic acid anhydride, ethylene glycol bistrimellitate dihydrate, het acid anhydride, nadic acid anhydride, methyl nadic acid anhydride, 5-(2,5-dioxotetrahydro-3-furanyl)-3-methyl-3-cyclohexane-1,2-dicarboxylic acid anhydride, 3,4-dicarboxy-1,2,3,4-tetrahydro-1-naphthalene dicarboxylic acid anhydride, and 1-methyl-dicarboxy-1,2,3,4-tetrahydro-1-naphthalene dicarboxylic acid anhydride.

In addition, the compound described above as the acid anhydride may be used after being modified with glycol. Examples of the glycol which can be used for the modification include alkylene glycols such as ethylene glycol, propylene glycol, and neopentyl glycol; and polyether glycols such as polyethylene glycol, polypropylene glycol, and polytetramethylene ether glycol. Furthermore, a copolymerized polyethylene glycol of two or more kinds of these glycols and/or polyethylene glycols can also be used.

### (Coupling agent)

Examples of a coupling agent include a silane coupling agent, a titanate-based coupling agent, and an aluminum-based coupling agent.

Examples of the silane coupling agent include amino silanes such as γ-aminopropyltriethoxysilane, γ-aminopropyltrimethoxysilane, N-β-(aminoethyl)-γ-aminopropyltrimethoxysilane, N-β-(aminoethyl)-γ-aminopropyltrimethyldimethoxysilane, and N-phenyl-γ-aminopropyltrimethoxysilane; epoxy silanes such as β-(3,4-epoxycyclohexyl)ethyltrimethoxysilane, γ-glycidoxypropyltrimethoxysilane and γ-glycidoxypropyltriethoxysilane; vinyl silanes such as vinyltris(β-methoxyethoxy)silane, vinyltriethoxysilane, vinyltrimethoxysilane, and γ-methacryloxypropyltrimethoxysilane; and hexamethyldisilazane and γ-mercaptopropyltrimethoxysilane.

Examples of the titanate-based coupling agent include tetraisopropoxytitanium, tetra-n-butoxytitanium, butyl titanate dimer, tetrastearyl titanate, titanium acetylacetonate, titanium lactate, tetraoctylene glycol titanate, titanium lactate, and tetrastearoxy titanium.

Examples of the aluminum-based coupling agent include acetoalkoxyaluminum diisopropylate.

### (Pigment)

A pigment is not particularly limited, and examples thereof include those listed in Handbook of Paint Raw Materials of 1970 edition (compiled by Japan Paint Manufacturers Association), including organic and/or inorganic pigments such as extender pigments, white pigments, black pigments, gray pigments, red pigments, brown pigments, green pigments, blue pigments, metal powder pigments, luminous pigments, and pearl pigments, and including plastic pigments.

Examples of the extender pigment include precipitated barium sulfate, Gohun pigment, precipitated calcium carbonate, calcium bicarbonate, white limestone, alumina white, silica, hydrous fine silica (white carbon), ultrafine anhydrous silica (Aerosil), silica sand, talc, precipitated magnesium carbonate, bentonite, clay, kaolin, and ocher.

Specific examples of the organic pigment include various insoluble azo pigments such as Benzidine Yellow, Hansa Yellow and Lake Red 4R; soluble azo pigments such as Lake Red C, Carmine 6B and Bordeaux 10; various (copper) phthalocyanine-based pigments such as Phthalocyanine Blue and Phthalocyanine Green; various basic dyeing lakes such as Rhodamine Lake and Methyl Violet Lake; various mordant dye-based pigments such as Quinoline Lake and Fast Sky Blue; various vat dye-based pigments such as anthraquinonebased pigments, thioindigo-based pigments and perionone-based pigments; various quinacridone-based pigments such as Cinquasia Red B; various dioxazine-based pigments such as Dioxazine Violet; various condensed azo pigments such as Cromophtal; and Aniline Black.

Examples of the inorganic pigment include various chromates such as chrome yellow, zinc chromate, and molybdate orange; various ferrocyanic compounds such as Prussian blue; various metal oxides such as titanium oxide, zinc white, Mapikoero, iron oxide, bengara, chrome oxide green, and zirconium oxide; various sulfides or selenides such as cadmium yellow, cadmium red, and mercury sulfide; various sulfates such as barium sulfate and lead sulfate; various silicates such as calcium silicate and ultramarine blue; various carbonates such as calcium carbonate and magnesium carbonate; various phosphates such as cobalt violet and manganese violet; various metal powders such as aluminum powder, gold powder, silver powder, copper powder, bronze powder, and brass powder; flake pigments and mica flake pigments of these metals; metallic pigments and pearl pigments such as mica flake pigments and mica iron oxide pigment in the form coated with metal oxide; graphite, and carbon black.

Examples of the plastic pigment include "Grandoll PP-1000" and "PP-2000S" manufactured by DIC Corporation.

The pigment to be used may be appropriately selected according to the purpose, but for example, from the viewpoint of excellent durability, weather resistance, and design properties, an inorganic oxide such as titanium oxide and zinc white is preferably used as a white pigment, and carbon black is preferably used as a black pigment.

A blending amount of the pigment is, for example, 1 to 400 parts by mass with respect to 100 parts by mass of the total amount of non-volatile components of the polyol composition (X) and the polyisocyanate composition (Y), and is more preferably 10 to 300 parts by mass in order to improve the adhesiveness and the blocking resistance.

### (Plasticizer)

Examples of a plasticizer include a phthalic acid-based plasticizer, a fatty acid-based plasticizer, an aromatic polycarboxylic acid-based plasticizer, a phosphoric acid-based plasticizer, a polyol-based plasticizer, an epoxy-based plasticizer, a polyester-based plasticizer, and a carbonate-based plasticizer.

Examples of the phthalic acid-based plasticizer include phthalic acid ester-based plasticizers such as dimethyl phthalate, diethyl phthalate, dibutyl phthalate, diisobutyl phthalate, dihexyl phthalate, diheptyl phthalate, di-(2-ethylhexyl) phthalate, di-n-octyl phthalate, dinonyl phthalate, diisononyl phthalate, didecyl phthalate, diisodecyl phthalate, ditridecyl phthalate, diundecyl phthalate, dilauryl phthalate, distearyl phthalate, diphenyl phthalate, dibenzy phthalate, butyl benzyl phthalate, dicyclohexyl phthalate, octyl decyl phthalate, dimethyl isophthalate, di-(2-ethylhexyl) isophthalate, and diisooctyl isophthalate; and tetrahydrophthalic acid ester-based plasticizers such as di-(2-ethylhexyl) tetrahydrophthalate, di-n-octyl tetrahydrophthalate, and diisodecyl tetrahydrophthalate.

Examples of the fatty acid-based plasticizer include adipic acid-based plasticizers such as di-n-butyl adipate, di-(2-ethylhexyl) adipate, diisodecyl adipate, diisononyl adipate, di(C6-C10 alkyl) adipate, and dibutyl diglycol adipate; azelaic acid-based plasticizers such as di-n-hexyl azelate, di-(2-ethylhexyl) azelate, and diisooctyl azelate; sebacic acid-based plasticizers such as di-n-butyl sebacate, di(2-ethylhexyl) sebacate and diisononyl sebacate, maleic acid-based plasticizers such as dimethyl maleate, diethyl maleate, di-n-butyl maleate, and di(2-ethylhexyl) maleate; fumaric acid-based plasticizers such as di-n-butyl fumarate and di(2-ethylhexyl) fumarate; itaconic acid-based plasticizers such as monomethyl itaconate, monobutyl itaconate, dimethyl itaconate, diethyl itaconate, dibutyl itaconate, and di-(2-ethylhexyl) itaconate; stearic acid-based plasticizers such as n-butyl stearate, glycerin monostearate, and diethylene glycol distearate; oleic acid-based plasticizers such as butyl oleate, glyceryl monooleate, and diethylene glycol monooleate; citric acid-based plasticizer such as triethyl citrate, tri-n-butyl citrate, acetyl triethyl citrate, acetyl tributyl citrate, andacetyl tri-(2-ethylhexyl) citrate; ricinoleic acid-based plasticizers such as methyl acetyl ricinoleate, butyl acetyl ricinoleate, glyceryl monoricinoleate, and diethylene glycol monoricinoleate; and other fatty acid-based plasticizers such as diethylene glycol monolaurate, diethylene glycol dipelargonate, and pentaerythritol fatty acid ester.

Examples of the aromatic polycarboxylic acid-based plasticizer include trimellitic acid-based plasticizers such as tri-n-hexyl trimellitate, tri-(2-ethylhexyl) trimellitate, tri-n-octyl trimellitate, triisooctyl trimellitate, triisononyl trimellitate, tridecyl trimellitate, and triisodecyl trimellitate; and pyromellitic acid-based plasticizers such as tetra-(2-ethylhexyl) pyromellitate and tetra-n-octyl pyromellitate.

Examples of the phosphoric acid-based plasticizer include triethyl phosphate, tributyl phosphate, tri-(2-ethylhexyl) phosphate, tributoxyethyl phosphate, triphenyl phosphate, octyldiphenyl phosphate, cresyldiphenyl phosphate, cresylphenyl phosphate, tricresyl phosphate, trixylenyl phosphate, tris(chloroethyl) phosphate, tris(chloropropyl) phosphate, tris(dichloropropyl) phosphate, and tris(isopropylphenyl) phosphate.

Examples of the polyol-based plasticizer include glycol-based plasticizers such as diethylene glycol dibenzoate, dipropylene glycol dibenzoate, triethylene glycol dibenzoate, triethylene glycol di-(2-ethylbutyrate), triethylene glycol di-(2-ethylhexoate), and dibutyl methylene bisthioglycolate; and glycerin-based plasticizers such as glycerol monoacetate, glycerol triacetate, and glycerol tributyrate.

Examples of the epoxy-based plasticizer include epoxidized soybean oil, epoxybutyl stearate, di-2-ethylhexyl epoxyhexahydrophthalic acid, diisodecyl epoxyhexahydrophthalic acid, epoxidized triglyceride, octyl epoxidized oleate, and decyl epoxidized oleate.

Examples of the polyester-based plasticizer include an adipic acid-based polyester, a sebacic acid-based polyester, and a phthalic acid-based polyester.

Examples of the carbonate-based plasticizer include propylene carbonate and ethylene carbonate.

In addition, examples of the plasticizer also include partially hydrogenated terphenyl, an adhesive plasticizer, and a polymerizable plasticizer such as diallyl phthalate, an acrylic monomer, and an oligomer. These plasticizers can be used alone or in combination of two or more kinds thereof.

### (Phosphoric acid compound)

Examples of a phosphoric acid compound include phosphoric acid, pyrrolidone, triphosphoric acid, phosphoric acid methyl ester, phosphoric acid ethyl ester, phosphoric acid butyl ester, dibutyl phosphate, phosphoric acid 2-ethylhexyl ester, bis(2-ethylhexyl) phosphate, phosphoric acid isododecyl ester, phosphoric acid butoxyethyl ester, phosphoric acid oleyl ester, phosphoric acid tetracosyl ester, phosphoric acid 2-hydroxyethyl methacrylate ester, and polyoxyethylene alkyl ether phosphate.

### (Form of adhesive)

The two-liquid curable adhesive according to the invention may be in any form of a solvent type or a solvent-free type. In the present specification, the "solvent type" adhesive refers to a form of adhesive used in a so-called dry lamination method, which is a method that an adhesive is applied onto a base material and then heated in an oven or the like to volatilize an organic solvent in the coating film, and the base material is bonded to another base material. Any one or both of the polyisocyanate composition (X) and the polyol composition (Y) contains the organic solvent which can dissolve (dilute) the constituent components of the polyisocyanate composition (X) and the polyol composition (Y) used in the invention.

Examples of the organic solvent include esters such as ethyl acetate, butyl acetate, and cellosolve acetate; ketones such as acetone, methyl ethyl ketone, isobutyl ketone, and cyclohexanone; ethers such as tetrahydrofuran and dioxane; aromatic hydrocarbons such as toluene and xylene; halogenated hydrocarbons such as methylene chloride and ethylene chloride; dimethyl sulfoxide, and dimethyl sulfoamide. An organic solvent used as a reaction medium in the production of the constituent components of the polyisocyanate composition (X) and the polyol composition (Y) may be further used as a diluent during coating.

In the present specification, the "solvent-free type" adhesive refers to a form of adhesive used in a so-called non-solvent lamination method, which is a method that the polyisocyanate composition (X) and the polyol composition (Y) does not substantially contain highly soluble organic solvents such as esters such as ethyl acetate, butyl acetate, and cellosolve acetate, ketones such as acetone, methyl ethyl ketone, isobutyl ketone, and cyclohexanone, ethers such as tetrahydrofuran and dioxane, aromatic hydrocarbons such as toluene and xylene, halogenated hydrocarbons such as methylene chloride and ethylene chloride, dimethyl sulfoxide, and dimethyl sulfoamide, particularly, ethyl acetate or methyl ethyl ketone, and after applying an adhesive onto a base material, the base material is bonded to another base material without going through a step of performing a heating in an oven or the like to volatilize the solvent. In a case where an organic solvent used as a reaction medium in the production of the constituent components of the polyisocyanate composition (X) or the polyol composition (Y), or in the production of raw materials thereof cannot be completely removed, and a trace amount of the organic solvent remains in the polyisocyanate composition (X) or the polyol composition (Y), it is considered that the organic solvent is not substantially contained. In addition, in a case where the polyol composition (Y) contains a low-molecular-weight alcohol, the low-molecular-weight alcohol reacts with the polyisocyanate composition (X) to be a part of the coating film, so it is not necessary to volatilize the alcohol after the coating. Therefore, such a form is also treated as a solvent-free type adhesive, and the low-molecular-weight alcohol is not regarded as the organic solvent.

The two-liquid curable adhesive according to the present invention is preferably used by blending the polyisocyanate composition (X) and the polyol composition (Y) such that a ratio [NCO]/[OH] of the number of moles of isocyanate groups [NCO] included in the polyisocyanate composition (X) to the number of moles of hydroxyl groups [OH] included in the polyol composition (Y) is 1.0 to 3.0. As a result, appropriate curing properties can be obtained without depending on the environmental humidity during the coating.

### <Laminate>

For example, the laminate according to the invention is obtained by a method including a two-liquid mixing step of mixing the polyisocyanate composition (X) and the polyol composition (Y) in advance, applying the mixture onto a first base material, then laminating a second base material on the applied surface, and curing the adhesive layer; or a method including a two-liquid separate coating step of applying the polyisocyanate composition (X) and the polyol composition (Y) onto a first base material and a second base material separately, laminating the first base material and the second base material by bringing the applied surfaces into contact with each other and performing pressure bonding, and curing the adhesive layer. The film to be used is not particularly limited, and can be appropriately selected depending on the purpose.

As for food packaging, examples thereof include a polyethylene terephthalate (PET) film, a polystyrene film, a polyamide film, a polyacrylonitrile film, a polyethylene film (low-density polyethylene film (LLDPE), high-density polyethylene film (HDPE), uniaxially oriented polyethylene film (MDOPE), and biaxially oriented polyethylene film (OPE)), a polypropylene film (unoriented polypropylene film (CPP) and biaxially oriented polypropylene film (OPP)), a polyolefin film in which an olefin-based heat sealable resin layer is provided on one surface or both surfaces of a resin having gas barrier property, such as an ethylene vinyl alcohol copolymer and polyvinyl alcohol, a polyvinyl alcohol film, and an ethylene-vinyl alcohol copolymer film.

In addition, it is also preferable to use a biomass film, a biodegradable film, or a regenerated plastic film, which is formed of a material containing a biomass-derived component, a biodegradable component, or a regenerated component.

The biomass film, the biodegradable film, and the regenerated plastic film are also sold by various companies. In addition, various films certified in each country, for example, a film sheet listed in a biomass-certified product list described in Japan Organic Resources Association, a film listed in an Eco Mark-certified product list described in Japan Environmental Association, and a film having a symbol mark established by Japan BioPlastics Association can be used.

### (Biomass film)

Specific examples of a well-known biomass film include a film made from a biomass-derived ethylene glycol as a raw material. The biomass-derived ethylene glycol is produced using ethanol (biomass ethanol) produced from biomass as a raw material. For example, the biomass-derived ethylene glycol can be obtained by a method of producing ethylene glycol from the ethanol from biomass through ethylene oxide by a known method in the related art. In addition, commercially available biomass ethylene glycol may be used, and for example, biomass ethylene glycol commercially available from India Glycols Ltd. can be suitably used.

For example, as an alternative to a polyethylene terephthalate film using a petroleum-based raw material in the related art, a film containing a biomass polyester, a biomass polyethylene terephthalate, or the like, in which the biomass-derived ethylene glycol is used as a diol unit and a dicarboxylic acid derived from fossil fuel is used as a dicarboxylic acid unit, is known.

As the dicarboxylic acid unit of the biomass polyester, a dicarboxylic acid derived from a fossil fuel is used. As the dicarboxylic acid, an aromatic dicarboxylic acid, an aliphatic dicarboxylic acid, or a derivative thereof can be used without limitation.

In addition, a copolymerized polyester may be used as the copolymer component, the copolymerized polyester being obtained by adding a third component such as a bifunctional oxycarboxylic acid and at least one polyfunctional compound selected from the group consisting of a tri- or higher functional polyhydric alcohol for forming a crosslinking structure, a tri- or higher functional polyvalent carboxylic acid and/or an acid anhydride thereof, and a tri- or higher functional oxycarboxylic acid, in addition to the diole content and the dicarbon content discribed above.

In addition, for example, as an alternative to a polyolefin-based film using a petroleum-based raw material in the related art, a biomass polyolefin-based film such as a biomass polyethylene-based film containing a polyethylene-based resin using ethylene glycol derived from biomass as a raw material, and a biomass polyethylene-polypropylene-based film is also known.

The polyethylene-based resin is not particularly limited except for the use of ethylene glycol derived from the biomass as a part of the raw material, and examples thereof include a homopolymer of ethylene and a copolymer of ethylene as a main component and α-olefin (ethylene-α-olefin copolymer containing 90% by mass or more of an ethylene unit). These can be used alone or in combination of two or more kinds thereof.

The α-olefin constituting the copolymer of ethylene and α-olefin is not particularly limited, and examples thereof include α-olefins having 4 to 8 carbon atoms, such as 1-butene, 4-methyl-1-pentene, 1-hexene, and 1-octene. A known polyethylene resin such as a low-density polyethylene resin, a medium-density polyethylene resin, and a linear low-density polyethylene resin can be used. Among these, from the viewpoint of making it less likely to cause damage such as holes or breaks even in a case where the films are rubbed, a linear low-density polyethylene resin (LLDPE) (a copolymer of ethylene and 1-hexene or a copolymer of ethylene and 1-octene) is preferable, and a linear low-density polyethylene resin having a density of 0.910 to 0.925 g/cm³ is more preferable.

As the biomass film, a film using a biomass raw material classified by a biomass plasticity defined in ISO 16620 or ASTM D6866 is also available. In the atmosphere, a radioactive carbon 14C is present at a ratio of 1 in 1012 carbon atoms, and this ratio is not changed even in carbon dioxide in the atmosphere. Therefore, the ratio is not changed even in a plant in which the carbon dioxide is fixed by photosynthesis. Therefore, the carbon of the plant-derived resin includes the radioactive carbon 14C. On the other hand, the carbon of the fossil fuel-derived resin does not substantially include the radioactive carbon 14C. Therefore, by measuring the concentration of the radioactive carbon 14C in the resin with an accelerator mass spectrometer, a content proportion of the plant-derived resin in the resin, that is, the biomass plasticity can be obtained.

Examples of the plant-derived low-density polyethylene as the biomass plastic in which the biomass plasticity defined in ISO 16620 or ASTM D6866 is 80% or more, preferably 90% or more, include product name "SBC818", "SPB608", "SBF0323HC", "STN7006", "SEB853", "SPB681" and the like manufactured by Braskem S.A.; and a film using these as a raw material can be suitably used.

In addition, a film or a sheet obtained by blending starch or polylactic acid, which is a biomass raw material, is also known. These can be appropriately selected and used depending on the application.

The biomass film may be a laminate in which a plurality of biomass films are laminated, or may be a laminate of a petroleum-based film in the related art and a biomass film. In addition, the biomass film may be an unstretched film or a stretched film, and the production method thereof is not limited.

### (Biodegradable film)

Specific examples of a well-known biodegradable film include a film formed of a biodegradable resin which can be generally obtained, as a raw material. Examples thereof include polycaprolactone, polyvinyl alcohol, polyamide, cellulose ester, a lactic acid-based polyester resin, an aliphatic polyester-based resin, and an aliphatic-aromatic polyester-based resin. These biodegradable resins may be used alone or in combination of two or more kinds thereof. Among these, an aliphatic polyester-based resin or an aliphatic-aromatic polyester-based resin is preferably used.

Examples of the aliphatic polyester-based resin include aliphatic polyester obtained by a polycondensation reaction of an aliphatic diol and an aliphatic dicarboxylic acid. Examples of the aliphatic diol include ethylene glycol, 1,3-propanediol, 1,4-butanediol, 1,5-pentanediol, 1,6-hexanediol, 1,4-cyclohexanediol, and 1,4-cyclohexanedimethanol. These may be used alone or as a mixture. Among these, 1,4-butanediol is preferable. Examples of the aliphatic dicarboxylic acid include oxalic acid, succinic acid, glutaric acid, adipic acid, sebacic acid, suberic acid, and dodecanedioic acid, and an acid anhydride which is a derivative of these may be used. Among these, a succinic acid or a succinic anhydride, or a mixture of these and adipic acid is preferable.

Specific examples thereof include polybutylene succinate (PBS) obtained from 1,4-butanediol and succinic acid (for example, BioPBS manufactured by PPT MCC Biochem Co., Ltd.), and polybutylene succinate adipate (PBSA) obtained by copolymerizing adipic acid with PBS.

Examples of the aliphatic-aromatic polyester-based resin include a copolymer including an aliphatic dicarboxylic acid unit, an aromatic dicarboxylic acid unit, and a chainlike aliphatic and/or alicyclic diol unit. A diol component which provides the diol unit is a compound normally having 2 to 10 carbon atoms, and examples thereof include ethylene glycol, 1,3-propanediol, 1,4-butanediol, and 1,4-cyclohexanedimethanol. Among these, a diol having 2 to 4 carbon atoms is preferable, and ethylene glycol or 1,4-butanediol is preferable and 1,4-butanediol is more preferable. A dicarboxylic acid component which provides the dicarboxylic acid unit is a compound normally having 2 to 10 carbon atoms, and examples thereof include succinic acid, adipic acid, suberic acid, sebacic acid, and dodecanedioic acid. Among these, succinic acid or adipic acid is preferable. Examples of an aromatic dicarboxylic acid component which provides the aromatic dicarboxylic acid unit include terephthalic acid, isophthalic acid, and naphthalene dicarboxylic acid. Among these, terephthalic acid or isophthalic acid is preferable, and terephthalic acid is more preferable.

Specific examples thereof include PBAT which is a copolymer of 1,4-butanediol, adipic acid, and terephthalic acid (for example, Ecoflex manufactured by BASF).

Examples of the other biodegradable resins include poly(3-hydroxyalkanoate) of an aliphatic polyester copolymer obtained from a hydroxyalkanoic acid and a polyvalent carboxylic acid (in particular, poly(3-hydroxybutyrate-co-3-hydroxyhexanoate) (PHBH) (for example, AONILEX manufactured by KANEKA CORPORATION)), and polylactic acid (PLA) (for example, REVODE manufactured by Kaisei Materials Co., Ltd. and Ingeo manufactured by NatureWorks LLC).

The biodegradable film may be a laminate in which a plurality of biodegradable films are laminated, or may be a laminate of a petroleum-based film in the related art and a biodegradable film. In addition, the biodegradable film may be an unstretched film or a stretched film, and the production method thereof is not limited.

The film may be subjected to a stretching treatment. As a stretching treatment method, a method of melt-extruding the resin by an extrusion film forming method or the like to form a sheet, and then performing simultaneous biaxial stretching or sequential biaxial stretching is typical. In addition, in a case of the sequential biaxial stretching, it is general that a machine direction stretching is first performed and then a transverse direction stretching is performed. Specifically, a method of combining the machine direction stretching using a difference in speed between rolls and the transverse direction stretching using a tenter is often used.

Various surface treatments such as a flame treatment and a corona discharge treatment may be performed as necessary, so that an adhesive layer having no defects such as film breakage or chipping is formed on the film surface.

Alternatively, a film in which a vapor-deposited layer of a metal such as aluminum or a metal oxide such as silica and alumina is laminated, or a barrier film containing a gas barrier layer such as polyvinyl alcohol, an ethylene-vinyl alcohol copolymer, and vinylidene chloride may be used in combination. By using such a film, a laminate having barrier properties against water vapor, oxygen, alcohol, an inert gas, a volatile organic substance (fragrance), and the like can be formed.

The paper is not particularly limited, and a known paper base material can be used. Specifically, the paper is manufactured by a known paper machine using natural fibers for papermaking, such as wood pulp, and papermaking conditions are not particularly specified. Examples of the natural fiber for papermaking include wood pulp such as coniferous pulp and broadleaf pulp, non-wood pulp such as manila hemp pulp, sisal hemp pulp, and flax pulp, and pulp obtained by chemically modifying these pulps. As the type of the pulp, chemical pulp, ground pulp, chemi-ground pulp, thermomechanical pulp, or the like, which is obtained by a sulfate cooking method, an acid/neutral/alkali bisulfite cooking method, a soda cooking method, or the like, can be used. In addition, various commercially available high-quality papers, coated papers, underlaid papers, impregnated papers, cardboard, or the like can also be used.

More specific examples of the configuration of the laminate include:
(1) base material 1/adhesive layer 1/sealant film;
(2) base material 1/adhesive layer 1/metal-deposited unstretched film;
(3) base material 1/adhesive layer 1/metal-deposited stretched film;
(4) transparent vapor-deposited stretched film/adhesive layer 1/sealant film;
(5) base material 1/adhesive layer 1/base material 2/adhesive layer 2/sealant film;
(6) base material 1/adhesive layer 1/metal-deposited stretched film/adhesive layer 2/sealant film;
(7) base material 1/adhesive layer 1/transparent vapor-deposited stretch film/adhesive layer 2/sealant film;
(8) base material 1/adhesive layer 1/metal layer/adhesive layer 2/sealant film;
(9) base material 1/adhesive layer 1/base material 2/adhesive layer 2/metal layer/adhesive layer 3/sealant film; and
(10) base material 1/adhesive layer 1/metal layer/adhesive layer 2/base material 2/adhesive layer 3/sealant film,
but the invention is not limited thereto.

Examples of the base material 1 used in the configuration (1) include an MDOPE film, an OPE film, an OPP film, a PET film, a nylon film, and paper. In addition, as the base material 1, a base material which has been subjected to a coating for the purpose of improving gas barrier property, ink receptivity in a case of providing a printing layer described later, or the like may be used. Examples of a commercially available product of the base material film 1 to be coated include a K-OPP film and a K-PET film. The adhesive layer 1 is a cured coating film of the adhesive according to the invention. Examples of the sealant film include a CPP film, an LLDPE film, and a gas barrier heat seal film. A printing layer may be provided on a surface of the base material 1 on the adhesive layer 1 side (in a case of using the base material film 1 which has been coated, a surface of the coating layer on the adhesive layer 1 side) or a surface of the base material 1 on a side opposite to the adhesive layer 1. The printing layer is formed by a general printing method which has been used for printing on a conventional polymer film or paper, using various printing inks such as a gravure ink, a flexo ink, an offset ink, a letterpress ink, and an inkjet ink.

Examples of the base material 1 used in the configurations (2) and (3) include an MDOPE film, an OPE film, an OPP film, a PET film, and paper. The adhesive layer 1 is a cured coating film of the adhesive according to the invention. As the metal-deposited unstretched film, a VM-CPP film, a VM-LLDPE film, or the like, which has been subjected to metal deposition with aluminum or the like on a CPP film, an LLDPE film, or a gas barrier heat seal film, can be used; and as the metal-deposited stretched film, a VM-MDOPE film, a VM-OPE film, or a VM-OPP film, which has been subjected to metal deposition with aluminum or the like on an MDOPE film, an OPE film, or an OPP film, can be used. A printing layer may be provided on any surface of the base material 1 in the same manner as in the configuration (1).

Examples of the transparent vapor-deposited stretch film used in the configuration (4) include a film obtained by performing silica or alumina deposition on an MDOPE film, an OPE film, an OPP film, a PET film, a nylon film, or the like. A film obtained by performing a coating on a vapor-deposited layer may be used for the purpose of protecting an inorganic vapor-deposited layer of silica or alumina. The adhesive layer 1 is a cured coating film of the adhesive according to the invention. Examples of the sealant film include the same as in the configuration (1). A printing layer may be provided on a surface of the transparent vapor-deposited stretch film on the adhesive layer 1 side (in a case of using the vapor-deposited layer which has been coated, a surface of the coating layer on the adhesive layer 1 side). A method for forming the printing layer is the same as in the configuration (1).

Examples of the base material 1 used in the configuration (5) include a PET film and paper. Examples of the base material 2 include a nylon film. At least one of the adhesive layer 1 or the adhesive layer 2 is a cured coating film of the adhesive according to the invention. Examples of the sealant film include the same as in the configuration (1). A printing layer may be provided on any surface of the base material 1 in the same manner as in the configuration (1).

Examples of the base material 1 of the configuration (6) include the same as that in the configurations (2) and (3). Examples of the metal-deposited stretched film include a VM-MDOPE film, a VM-OPE film, a VM-OPP film, and a VM-PET film, each of which has been subjected to metal deposition with aluminum or the like on an MDOPE film, an OPE film, an OPP film, or a PET film. At least one of the adhesive layer 1 or the adhesive layer 2 is a cured coating film of the adhesive according to the present invention. Examples of the sealant film include the same as in the configuration (1). A printing layer may be provided on any surface of the base material 1 in the same manner as in the configuration (1).

Examples of the base material 1 of the configuration (7) include a PET film and paper. Examples of the transparent vapor-deposited stretched film include the same as that in the configuration (4). At least one of the adhesive layer 1 or the adhesive layer 2 is a cured coating film of the adhesive according to the invention. Examples of the sealant film include the same as in the configuration (1). A printing layer may be provided on any surface of the base material 1 in the same manner as in the configuration (1).

Examples of the base material 1 of the configuration (8) include a PET film and paper. Examples of the metal layer include an aluminum foil. At least one of the adhesive layer 1 or the adhesive layer 2 is a cured coating film of the adhesive according to the invention. Examples of the sealant film include the same as in the configuration (1). A printing layer may be provided on any surface of the base material 1 in the same manner as in the configuration (1).

Examples of the base material 1 of the configurations (9) and (10) include a PET film and paper. Examples of the base material 2 include a nylon film. Examples of the metal layer include an aluminum foil. At least one layer of the adhesive layer 1, the adhesive layer 2, or the adhesive layer 3 is a cured coating film of the adhesive according to the invention. Examples of the sealant film include the same as in the configuration (1). A printing layer may be provided on any surface of the base material 1 in the same manner as in the configuration (1).

In a case where the laminate according to the invention includes at least one of a metal deposition film, a transparent vapor deposition film, or a metal layer, it is preferable that the adhesive layer in contact with the metal deposition layer, the transparent vapor deposition layer, and the metal layer is the cured coating films of the adhesive according to the invention.

In a case where the adhesive according to the invention is used as an adhesive assisting agent, the adhesive assisting agent in the invention is applied onto a film material serving as the base material using a roll such as a gravure roll, the organic solvent is volatilized by heating in an oven or the like, and then a polymer material is melted by an extruder to laminate the polymer material, thereby obtaining the laminate according to the invention.

The laminate according to the invention may further include other films or base materials, in addition to the configurations (1) to (10) described above. As the other base materials, in addition to the stretched film, unstretched film, and transparent vapor deposition film described above, a porous base material such as paper, wood, and leather, which will be described later, can also be used. An adhesive used in bonding the other base materials may be the adhesive according to the invention or may not be the adhesive according to the invention.

The "other layers" may contain known additives and stabilizers, for example, an antistatic agent, an easy-adhesion coating agent, a plasticizer, a lubricant, an antioxidant, and the like. In addition, the "other layers" may be obtained by performing a corona treatment, plasma treatment, ozone treatment, chemical treatment, solvent treatment, or the like on the surface of the film as a pre-treatment, in order to improve adhesiveness in a case of being laminated with other materials.

The laminate according to the invention can be suitably used for various applications, for example, packaging materials for food, pharmaceuticals, and daily necessities, a lid material, paper tableware such as paper straws, paper napkins, paper spoons, paper plates, and paper cups, a soundproof wall material, a roofing material, a solar cell panel material, a packaging material for a battery, a window material, an outdoor flooring material, a lighting protection material, an automobile member, a signboard, a sticker, and other outdoor industrial applications, a decorative sheet to be used in an in-mold decoration method for injection molding, a liquid detergent for laundry, a liquid detergent for a kitchen, a liquid detergent for a bath, a liquid soap for a bath, a liquid shampoo, a liquid conditioner, and other packaging materials.

### <Packaging material>

The laminate according to the invention can be used as a multilayer packaging material for protecting food, pharmaceuticals, and the like. In a case of being used as a multilayer packaging material, the layer configuration thereof may be changed according to the contents, the use environment, and the use form. In addition, the package according to the invention may be appropriately provided with a peelable opening treatment or a resealable unit.

As an example of a specific aspect of the packaging material according to the invention, in a case of a laminate having a sealant film, such as the configurations (1) and (4) to (10) of the laminate described above, after the surfaces of the sealant films of the laminate are overlapped with each other facing each other, the peripheral edges thereof are heat-sealed to form a bag shape. Examples of the bag making method include a method of bending or stacking the laminate according to the invention to face an inner layer surface (surface of the sealant film) to each other and heat-sealing the peripheral end part thereof by using the forms of, for example, a side seal type, a two-side seal type, a three-side seal type, a four-side seal type, an envelope seal type, a gusset seal type, a pleat seal type, a flat bottom seal type, a square bottom seal type, a gusset type, or other heat-seal types. The packaging material according to the invention can take various forms depending on the contents, the use environment, and the use form. A self-standing packaging material (standing pouch) or the like is also possible. As a method of the heat sealing, a known method such as a bar sealing, a rotary roll sealing, a belt sealing, an impulse sealing, a high-frequency sealing, and an ultrasonic sealing can be used.

A product is produced using the packaging material according to the invention by filling the packaging material with contents from an opening portion, and heat-sealing the opening portion. Examples of the contents to be filled include, as food, confectioneries such as rice confectioneries, bean snacks, nuts, biscuits/cookies, wafer cookies, marshmallows, pies, half-baked cakes, candies, and snack foods; staples such as bread, snack noodle, instant noodle, dry noodle, pasta, aseptic packaging rice, soupy rice, rice gruel, packaging rice cakes, and cereal foods; processed agricultural products such as pickles, cooked beans, natto, fermented soybean paste, frozen bean curd, bean curd, enokidake mushrooms, konjac, processed mountain vegetable products, jams, peanut cream, salads, frozen vegetables, and processed potato products; processed livestock products such as hams, bacons, sausages, processed chicken products, and canned beef; seafood products such as fish hams/sausages, fish jelly products, boiled fish pastes, seaweed, foods boiled in soy sauce, dried bonito, salted fish guts, smoked salmon, and karashi mentaiko; pulps such as peach, mandarin oranges, pineapples, apples, pears, and cherries; vegetables such as corns, asparagus, mushrooms, onions, carrots, white radishes, and potatoes; frozen household dishes such as hamburger steaks, meatballs, seafood fry, dumplings, and croquettes; prepared foods such as chilled ready-made dishes; milk products such as butter, margarine, cheese, cream, instant creamy powder, and modified powder milks for infant; food products such as liquid seasonings, retort curries, and pet foods.

In addition, examples thereof include, as non-food, various packaging materials including tobacco, disposable body warmer, pharmaceutical products such as infusion pack, liquid detergent for laundry, liquid detergent for kitchen, liquid detergent for bath, liquid soap for bath, liquid shampoo, liquid conditioner, cosmetics such as skin lotion and milky lotion, vacuum insulating material, and battery.

### EXAMPLES

Hereinafter, the invention will be described in more detail with reference to specific synthesis examples and examples, but the invention is not limited to these examples. In the following examples, "parts" and "%" represent "part by mass" and "% by mass", unless otherwise specified.

### <Preparation of polyisocyanate composition (X)>

### (Polyisocyanate composition (X-1))

Into a reaction container equipped with a stirrer, a thermometer, a nitrogen gas introduction pipe, and a condenser, 500.0 parts of tolylene diisocyanate (TDI) was charged, and the mixture was heated to 60°C with stirring in a nitrogen gas stream. Thereafter, 657.6 parts of a bifunctional polypropylene glycol (EXCENOL 420 manufactured by AGC Inc.) was added thereto while being careful of heat generation, and the mixture was heated to 80°C and reacted at 80°C for 2 hours. Next, a urethane prepolymer which was a reaction product of the TDI and polypropylene glycol was purified using a thin film distillator at a pressure of approximately 0.02 Torr and a temperature of 160°C such that the TDI in the urethane prepolymer was 0.05% by mass of the solid content, to obtain a polyisocyanate composition (X-1) in which. The NCO% of the polyisocyanate composition (X-1) was 8.9%.

### (Polyisocyanate composition (X-2))

Into a reaction container equipped with a stirrer, a thermometer, a nitrogen gas introduction pipe, and a condenser, 500.0 parts of hexamethylene diisocyanate (HDI) was charged, and the mixture was heated to 60°C with stirring in a nitrogen gas stream. Thereafter, 125.0 parts of a bifunctional polypropylene glycol (EXCENOL 420 manufactured by AGC Inc.) and 425.0 parts of a bifunctional polypropylene glycol (EXCENOL 1020 manufactured by AGC Inc.) were added thereto while being careful of heat generation, and the mixture was heated to 80°C and reacted at 80°C for 2 hours. Next, a urethane prepolymer which was a reaction product of the HDI and polypropylene glycol was purified using a thin film distillator at a pressure of approximately 0.02 Torr and a temperature of 150°C such that the HDI in the urethane prepolymer was 0.05% by mass of the solid content, to obtain a polyisocyanate composition (X-2). The NCO% of the polyisocyanate composition (X-2) was 7.9%.

### (Polyisocyanate composition (X-1U))

Into a reaction container equipped with a stirrer, a thermometer, a nitrogen gas introduction pipe, and a condenser, 900.0 parts of tolylene diisocyanate (TDI) was charged, and the mixture was heated to 60°C with stirring in a nitrogen gas stream. Thereafter, 25.8 parts of pure water was added thereto while being careful of heat generation, and the mixture was heated to 80°C and reacted at 80°C for 2 hours. Next, a urea derivative which was a reaction product of the TDI and water was purified using a thin film distillator at a pressure of approximately 0.01 Torr and a temperature of 160°C such that the TDI in the urea derivative was 0.002% by mass of the solid content, thereby obtaining a urea derivative (U-1). The urea derivative (U-1) is the compound represented by the general formula (1) described above, in which Ri is a residue of tolylene diisocyanate. The NCO% of the urea derivative composition (U-1) was 22.9%.

The urea derivative (U-1), 0.5 parts, was added to 99.5 parts of the polyisocyanate composition (X-1) to obtain a polyisocyanate composition (X-1U).

### (Polyisocyanate composition (X-2U))

Into a reaction container equipped with a stirrer, a thermometer, a nitrogen gas introduction pipe, and a condenser, 900.0 parts of hexamethylene diisocyanate (HDI) was charged, and the mixture was heated to 60°C with stirring in a nitrogen gas stream. Thereafter, 25.8 parts of pure water was added thereto while being careful of heat generation, and the mixture was heated to 80°C and reacted at 80°C for 2 hours. Next, a urea derivative which was a reaction product of the HDI and water was purified using a thin film distillator at a pressure of approximately 0.01 Torr and a temperature of 160°C such that the HDI in the urea derivative was 0.001% by mass of the solid content, thereby obtaining a urea derivative (U-2). The urea derivative (U-2) is the compound represented by the general formula (1) described above, in which Ri is a residue of hexamethylene diisocyanate. The NCO% of the urea derivative (U-2) was 23.7%.

The urea derivative (U-2), 0.05 parts, was added to 99.95 parts of the polyisocyanate composition (X-2) to obtain a polyisocyanate composition (X-2U).

### (Polyisocyanate composition (X-1X))

Into a reaction container equipped with a stirrer, a thermometer, a nitrogen gas introduction pipe, and a condenser, 500.0 parts of tolylene diisocyanate (TDI) was charged, and the mixture was heated to 60°C with stirring in a nitrogen gas stream. Thereafter, 657.6 parts of a bifunctional polypropylene glycol (EXCENOL 420 manufactured by AGC Inc.) was added thereto while being careful of heat generation, and the mixture was heated to 80°C and reacted at 80°C for 2 hours. Next, a urethane prepolymer which was a reaction product of the TDI and polypropylene glycol was purified using a thin film distillator at a pressure of approximately 0.009 Torr and a temperature of 160°C until the TDI in the urethane prepolymer was not detected (less than 0.001% by mass), thereby obtaining a polyisocyanate composition (X-1X). The NCO% of the polyisocyanate composition (X-1X) was 8.9%.

### (Polyisocyanate composition (X-2X))

Into a reaction container equipped with a stirrer, a thermometer, a nitrogen gas introduction pipe, and a condenser, 1000.0 parts of hexamethylene diisocyanate (HDI) was charged, and the mixture was heated to 60°C with stirring. Thereto, 0.5 parts of a quaternary ammonium salt was added dropwise, and the reaction was terminated by appropriately adding a deactivator thereto after the refractive index reached a predetermined value. Next, a nurate product which was a reaction product of the HDI was purified using a thin film distillator at a pressure of approximately 0.0009 Torr and a temperature of 160°C until the HDI in the nurate product was not detected (less than 0.001% by mass), thereby obtaining a polyisocyanate composition (X-2X). The NCO% of the polyisocyanate composition (X-2X) was 21.8%.

### <Adjustment of polyol composition (Y)>

### (Synthesis of polyol (B-1))

Into a reaction container provided with a stirrer, a thermometer, a nitrogen gas introduction pipe, a distillation pipe, a moisture separator, and the like, 54.0 parts of 3-methylpentanediol, 30.0 parts of trimethylolpropane, 60.0 parts of adipic acid, and 0.01 parts of titanium tetraisopropoxide were charged under introduction of nitrogen gas, and then the inner temperature was maintained at 220°C by gradually heating the reaction container so that the upper part temperature of the distillation pipe did not exceed 100°C. The esterification reaction was terminated at a point in which the acid value was 1 mgKOH/g or less, thereby obtaining a polyol (B-1) having a number-average molecular weight of 500 and a hydroxyl group value of 337.

### (Synthesis of polyol (B-2))

Into a reaction container provided with a stirrer, a thermometer, a nitrogen gas introduction pipe, a distillation pipe, a moisture separator, and the like, 54.0 parts of 3-methylpentanediol, 46.0 parts of isophthalic acid, and 0.01 parts of titanium tetraisopropoxide were charged under introduction of nitrogen gas, and then the inner temperature was maintained at 250°C by gradually heating the reaction container so that the upper part temperature of the distillation pipe did not exceed 100°C. The esterification reaction was terminated at a point in which the acid value was 1 mgKOH/g or less, thereby obtaining a polyol (B-2) having a number-average molecular weight of 500 and a hydroxyl group value of 224.

### (Synthesis of polyester polyol (B-9))

Into a reaction container provided with a stirrer, a thermometer, a nitrogen gas introduction pipe, a distillation pipe, a moisture separator, and the like, 7.2 parts by mass of ethylene glycol, 15.8 parts by mass of diethylene glycol, 22.5 parts by mass of neopentyl glycol, 21.9 parts by mass of adipic acid, 4.6 parts by mass of sebacic acid, and 28.0 parts by mass of isophthalic acid were charged under introduction of nitrogen gas, and then the inner temperature was maintained at 240°C by gradually heating the reaction container so that the upper part temperature of the distillation pipe did not exceed 100°C. The esterification reaction was terminated at a point in which the acid value was 1 mgKOH/g or less, thereby obtaining a polyol (B-6) having a number-average molecular weight of 700 and a hydroxyl group value of 159.0 mgKOH/g.

Polyol compositions (Y-1) to (Y-6) were prepared according to the formulations in Table 1. The unit of the amine value is mgKOH/g. Details of the compounds in the table are as follows.
Polyol (B-4): polypropylene polyol (manufactured by AGC Inc., EXCENOL 1030 (molecular weight = 1,000, hydroxyl group value = 160))
Polyol (B-5): polypropylene polyol (manufactured by AGC Inc., EXCENOL 420 (molecular weight = 400, hydroxyl group value = 280))
Polyol (B-6): polypropylene polyol (manufactured by AGC Inc., EXCENOL 430 (molecular weight = 400, hydroxyl group value = 400))
Polyol (B-7): polypropylene polyol (manufactured by SANYO CHEMICAL INDUSTRIES, LTD., SANNIX HD-402 (molecular weight = 600, hydroxyl group value = 404))
Amine compound (C-1): polyoxypropylene triamine (manufactured by Huntsman, Jeffamine T-403, molecular weight = 440, amine value = 355 mgKOH/g)
Amine compound (C-2): polyoxypropylene diamine (manufactured by Huntsman, Jeffamine D-2000, molecular weight = 2,000, amine value = 56 mgKOH/g)

**Table 1]**

| | Y-1 | Y-2 | Y-3 | Y-4 | Y-5 | Y-6 |
|---|---|---|---|---|---|---|
| Polyol (B-1) | 2000 | | 25.00 | | | |
| Polyol (B-2) | | 3000 | | 3000 | | |
| Castor oil (B-3) | 5.00 | | | | | |
| Polyol (B-4) | 13.70 | | 15.10 | | | |
| Polyol (B-5) | 4000 | 40.00 | 4000 | 4000 | | |
| Polyol (B-6) | | 1205 | | 4.95 | | |
| Polyol (B-7) | 9.50 | | | | | |
| Polyol (B-8) | | | | | 100.00 | |
| Polyol (B-9) | | | | | | 100.00 |
| Amine compound (C-1) | 9.00 | 17.00 | | 25.00 | | |
| Amine compound (C-2) | | | 1800 | | | |
| Dimethylolpropionic acid | 0.90 | | 0.90 | | | |
| ε-Caprolactam | 0.90 | 0.90 | 0.90 | | | |
| Dibutyltin dilaurate | | 0.05 | | 0.05 | | |
| Total | 100.00 | 100.00 | 100.00 | 100.00 | 100.00 | 100.0 |
| Amine value (mgKOH/g) | 32.1 | 60.7 | 10.1 | 89.3 | 0.0 | 0.0 |

### <Laminate producing method>

### (Example 1)

The polyisocyanate composition (X-1) was applied onto a nylon film (ON manufactured by UNITIKALTD., 15 µm), the polyol composition (Y-1) was applied onto a polyethylene film (LLDPE, manufactured by Mitsui Chemicals Tohcello, Inc., TUX-HC, 60 µm), and the nylon and the LLDPE were laminated and pressure-bonded to each other with a nip roll (50°C), and then aged at 40°C for 12 hours to obtain a laminate 1. In addition, laminates 2 and 3 were obtained in the same manner as described above, except that the aging time was changed to 24 hours and 48 hours. The coating amounts of the polyisocyanate composition (X-1) and the polyol composition (Y-1) were each 1.5 g/m² and 0.5 g/m².

### (Example 2) to (Example 6), (Comparative Example 1), and (Comparative Example 4)

Laminates 1 to 3 were obtained in the same manner as in Example 1, except that the polyisocyanate composition (X) and the polyol composition (Y) used were changed as shown in Table 2.

### (Comparative Example 2)

The polyisocyanate composition (X-1X) and the polyol composition (Y-6) were stirred and mixed with each other, the mixture was applied onto a nylon film (ON manufactured by UNITIKALTD., 15 µm) with a coating amount of 2.0 g/m², and the nylon was laminated and pressure-bonded to a polyethylene film (LLDPE, manufactured by Mitsui Chemicals Tohcello, Inc., TUX-HC, 60 µm) with a nip roll (50°C), and then aged at 40°C for 12 hours to obtain a laminate 1. In addition, laminates 2 and 3 were obtained in the same manner as described above, except that the aging time was changed to 24 hours and 48 hours. A mixing ratio of the polyisocyanate composition (X-1X) and the polyol composition (Y-6) was 1:1.

### (Comparative Example 4)

Laminates 1 to 3 were obtained in the same manner as in Comparative Example 2, except that the polyisocyanate composition (X) and the polyol composition (Y) used were changed as shown in Table 3.

### <Evaluation>

### (Heat seal strength)

The LLDPE films of the laminate 1 were opposed to each other, and heat-sealed at 180°C and 0.1 MPa for 1 second to produce a sample for evaluation. A test piece was cut out from the sample for evaluation in a width of 15 mm, and using a tensile tester, a heat seal strength (N/15 mm) of the film was measured at a peeling rate of 300 mm/min. The heat seal strength of the laminates 2 and 3 was also measured in the same manner. The evaluation was performed as follows. The results thereof are shown in Tables 2 and 3.
A: 60 N/15 mm or more
B: 50 N/15 mm or more
C: 30 to 49 N/15 mm
D: less than 30 N/15 mm

### (Storage stability)

A 15 ml glass bottle was filled with the polyisocyanate composition (X) of Examples and Comparative Examples, and stored at normal temperature for 6 months. Viscosities of the isocyanate composition (X) before and after the storage were each measured and evaluated in the following four stages, and the results thereof are shown in Table 4.
A: rate of change in viscosity was less than 5%.
B: rate of change in viscosity was 5% or more and less than 10%.
C: rate of change in viscosity was 10% or more and less than 15%.
D: rate of change in viscosity was 15% or more and less than 20%.

**[Table 2]**

| | Example 1 | Example 2 | Example 3 | Example 4 | Example 5 | Example 6 |
|---|---|---|---|---|---|---|
| Polyisocyanate composition (X-1) | O | | | | O | |
| Polyisocyanate composition (X-2) | | O | | | | O |
| Polyisocyanate composition (X-1U) | | | O | | | |
| Polyisocyanate composition (X-2U) | | | | O | | |
| Polyisocyanate composition (X-1X) | | | | | | |
| Polyisocyanate composition (X-2X) | | | | | | |
| Polyol composition (Y-1) | O | | O | | | |
| Polyol composition (Y-2) | | O | | O | | |
| Polyol composition (Y-3) | | | | | O | |
| Polyol composition (Y-4) | | | | | | O |
| Polyol composition (Y-5) | | | | | | |
| Polyol composition (Y-6) | | | | | | |
| Heat seal strength (12 hours) | B | B | A | B | B | B |
| Heat seal strength (24 hours) | A | B | A | A | B | B |
| Heat seal strength (48 hours) | A | A | A | A | A | B |

**[Table 3]**

| | Comparative Example 1 | Comparative Example 2 | Comparative Example 3 | Comparative Example 4 | Comparative Example 5 |
|---|---|---|---|---|---|
| Polyisocyanate composition (X-1) | | | | O | |
| Polyisocyanate composition (X-2) | | | | | O |
| Polyisocyanate composition (X-1U) | | | | | |
| Polyisocyanate composition (X-2U) | | | | | |
| Polyisocyanate composition (X-1X) | O | | O | | |
| Polyisocyanate composition (X-2X) | | O | | | |
| Polyol composition (Y-1) | | | O | | |
| Polyol composition (Y-2) | | | | | |
| Polyol composition (Y-3) | | | | | |
| Polyol composition (Y-4) | | | | | |
| Polyol composition (Y-5) | O | | | O | O |
| Polyol composition (Y-6) | | O | | | |
| Heat seal strength (12 hours) | D | D | C | D | D |
| Heat seal strength (24 hours) | D | D | C | C | C |
| Heat seal strength (48 hours) | C | C | C | B | B |

**[Table 4]**

| | (X-1) | (X-2) | (X-1U) | (X-2U) | (X-1X) | (X-2X) |
|---|---|---|---|---|---|---|
| Storage stability | B | B | B | B | C | C |

## Claims

1. A two-liquid curable adhesive comprising:
a polyisocyanate composition (X); and
a polyol composition (Y),
wherein the polyisocyanate composition (X) contains a compound (A1) having one or more isocyanate groups with a number-average molecular weight of more than 280 and an isocyanate monomer (A2) having a number-average molecular weight of 140 to 280,
a blending amount of the isocyanate monomer (A2) is 0.001% by mass or more and 0.1% by mass or less with respect to a solid content of the polyisocyanate composition (X), and
the polyol composition (Y) contains a polyol compound (B) and an amine compound (C) having an NH₂ group or an NHR group.

2. The two-liquid curable adhesive according to Claim 1,
wherein the polyol composition (Y) has an amine value of 20 to 70 mgKOH/g.

3. The two-liquid curable adhesive according to Claim 1,
wherein the compound (A1) having one or more isocyanate groups with a number-average molecular weight of more than 280 includes a compound represented by the following formula (1),
(R i) ₂-R₂ (1)
wherein R₁ is a residue excluding an isocyanate group of one diisocyanate compound selected from the group consisting of an aromatic diisocyanate, an aromatic-aliphatic diisocyanate, an aliphatic diisocyanate, and an alicyclic diisocyanate, and R₂ represents a uretdione group or a urea group).

4. The two-liquid curable adhesive according to Claim 3,
wherein a content of the compound represented by the formula (1) is 0.001% by mass or more and 30% by mass or less with respect to the solid content of the polyisocyanate composition (X).

5. The two-liquid curable adhesive according to Claim 3,
wherein the compound (A1) having one or more isocyanate groups with a number-average molecular weight of more than 280 is the urethane prepolymer (A1-1), and
an isocyanate compound used for synthesizing the urethane prepolymer (A1-1) is an aromatic diisocyanate, and an isocyanate compound used for synthesizing the compound represented by the general formula (1) is an aromatic diisocyanate.

6. The two-liquid curable adhesive according to Claim 3,
wherein the compound (A1) having one or more isocyanate groups with a number-average molecular weight of more than 280 is the urethane prepolymer (A1-1), and
an isocyanate compound used for synthesizing the urethane prepolymer (A1-1) is an aromatic-aliphatic diisocyanate, and an isocyanate compound used for synthesizing the compound represented by the general formula (1) is selected from an aromatic diisocyanate or an aromatic-aliphatic diisocyanate.

7. The two-liquid curable adhesive according to Claim 3,
wherein the compound (A1) having one or more isocyanate groups with a number-average molecular weight of more than 280 is the urethane prepolymer (A1-1), and
an isocyanate compound used for synthesizing the urethane prepolymer (A1-1) is an aliphatic diisocyanate, and an isocyanate compound used for synthesizing the compound represented by the general formula (1) is selected from an aromatic diisocyanate, an aromatic-aliphatic diisocyanate, or an aliphatic diisocyanate.

8. The two-liquid curable adhesive according to Claim 3,
wherein the compound (A1) having one or more isocyanate groups with a number-average molecular weight of more than 280 is the urethane prepolymer (A1-1), and
an isocyanate compound used for synthesizing the urethane prepolymer (A1-1) is an alicyclic diisocyanate, and an isocyanate compound used for synthesizing the compound represented by the general formula (1) is selected from an aromatic diisocyanate, an aromatic-aliphatic diisocyanate, an aliphatic diisocyanate, or an alicyclic diisocyanate.

9. The two-liquid curable adhesive according to Claim 3,
wherein the compound (A1) having one or more isocyanate groups with a number-average molecular weight of more than 280 is an isocyanate polymer, and
an isocyanate compound used for synthesizing the isocyanate polymer is an aromatic diisocyanate, and an isocyanate compound used for synthesizing the compound represented by the general formula (1) is an aromatic diisocyanate.

10. The two-liquid curable adhesive according to Claim 3,
wherein the compound (A1) having one or more isocyanate groups with a number-average molecular weight of more than 280 is an isocyanate polymer, and
an isocyanate compound used for synthesizing the isocyanate polymer is an aromatic-aliphatic diisocyanate, and an isocyanate compound used for synthesizing the compound represented by the general formula (1) is selected from an aromatic diisocyanate or an aromatic-aliphatic diisocyanate.

11. The two-liquid curable adhesive according to Claim 3,
wherein the compound (A1) having one or more isocyanate groups with a number-average molecular weight of more than 280 is an isocyanate polymer, and
an isocyanate compound used for synthesizing the isocyanate polymer is an aliphatic diisocyanate, and an isocyanate compound used for synthesizing the compound represented by the general formula (1) is selected from an aromatic diisocyanate, an aromatic-aliphatic diisocyanate, or an aliphatic diisocyanate.

12. The two-liquid curable adhesive according to Claim 3,
wherein the compound (A1) having one or more isocyanate groups with a number-average molecular weight of more than 280 is an isocyanate polymer, and
an isocyanate compound used for synthesizing the isocyanate polymer is an alicyclic diisocyanate, and an isocyanate compound used for synthesizing the compound represented by the general formula (1) is selected from an aromatic diisocyanate, an aromatic-aliphatic diisocyanate, an aliphatic diisocyanate, or an alicyclic diisocyanate.

13. The two-liquid curable adhesive according to Claim 1,
wherein the compound (A1) having one or more isocyanate groups with a number-average molecular weight of more than 280 includes a urethane prepolymer (A1-1) which is a reaction product of an isocyanate composition (i) and a polyol composition (ii).

14. The two-liquid curable adhesive according to Claim 13,
wherein the polyol composition (ii) contains at least one of a polyether polyol or a polyester polyol.

15. The two-liquid curable adhesive according to Claim 13,
wherein the polyol composition (ii) contains at least one of a glycol or a tri- or tetrafunctional aliphatic alcohol.

16. The two-liquid curable adhesive according to Claim 13,
wherein the polyol composition (ii) contains at least one selected from a castor oil, a dehydrated castor oil, a hydrogenated castor oil which is a hydrogenated product of the castor oil, or a castor oil-based polyol such as a castor oil adduct with 5 to 50 moles of alkylene oxides.

17. The polyisocyanate composition according to Claim 13,
wherein the isocyanate composition (i) contains at least one selected from an aromatic diisocyanate or an aromatic-aliphatic diisocyanate.

18. The two-liquid curable adhesive according to Claim 13,
wherein the urethane prepolymer (A1-1) is a reaction product of toluene diisocyanate and a polyol composition (ii) including at least one selected from a polyether polyol or a polyester polyol.

19. The two-liquid curable adhesive according to Claim 1,
wherein the amine compound (C) includes a polyoxypropylene polyamine.

20. The two-liquid curable adhesive according to Claim 1, further comprising:
a catalyst.

21. A laminate comprising:
a first base material;
a second base material; and
an adhesive layer for bonding the first base material and the second base material to each other,
wherein the adhesive layer is a cured coating film of the two-liquid curable adhesive according to any one of Claims 1 to 20.

22. A method for producing a laminate, comprising:
a step of applying a polyisocyanate composition (X) onto a first base material;
a step of applying a polyol composition (Y) onto a second base material; and
a step of bonding the first base material and the second base material so that the polyisocyanate composition (X) and the polyol composition (Y) are in contact with each other
wherein the polyisocyanate composition (X) contains a compound (A1) having one or more isocyanate groups with a number-average molecular weight of more than 280 and an isocyanate monomer (A2) having a number-average molecular weight of 140 to 280,
a blending amount of the isocyanate monomer (A2) is 0.001% by mass or more and 0.1% by mass or less with respect to a solid content of the polyisocyanate composition, and
the polyol composition (Y) contains a polyol compound (B) and an amine compound (C) having an NH₂ group or an NHR group.

23. A packaging material comprising:
the laminate according to Claim 22.
